(19) Europäisches Patentamt
European Patent Office
Office européen des brevets

(11) **EP 3 047 967 A1**

(12) **EUROPEAN PATENT APPLICATION**
published in accordance with Art. 153(4) EPC

(43) Date of publication:
**27.07.2016 Bulletin 2016/30**

(21) Application number: **14845482.0**

(22) Date of filing: **27.08.2014**

(51) Int Cl.:
***B32B 7/02*** *(2006.01)* ***B32B 27/00*** *(2006.01)*
***B32B 27/30*** *(2006.01)* ***C08J 5/18*** *(2006.01)*

(86) International application number:
**PCT/JP2014/072375**

(87) International publication number:
**WO 2015/041015 (26.03.2015 Gazette 2015/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **17.09.2013 JP 2013192406**

(71) Applicant: **FUJIFILM Corporation**
**Minato-ku**
**Tokyo 106-8620 (JP)**

(72) Inventors:
- **YAMAMOTO Yuya**
  **Fujinomiya-shi**
  **Shizuoka 418-8666 (JP)**
- **HAMA Takeshi**
  **Fujinomiya-shi**
  **Shizuoka 418-8666 (JP)**

(74) Representative: **Klunker . Schmitt-Nilson . Hirsch**
**Patentanwälte**
**Destouchesstraße 68**
**80796 München (DE)**

(54) **COMPOSITE FILM AND FILM MIRROR FOR SOLAR LIGHT REFLECTION**

(57) An object of the invention is to provide a composite film and a film mirror for solar light reflection, to which dust and the like is not likely to adhere, of which resistance to scratch due to dust and the like is excellent, and in which cleaning properties of adhered dust and the like are excellent. The composite film according to the invention includes a composite film having a support and a surface covering layer, in which an elastic recovery rate of the surface covering layer is 60% or greater, a surface hardness thereof is 100 N/mm$^2$ or less, and a water contact angle of a surface thereof is 40° or less.

FIG. 1

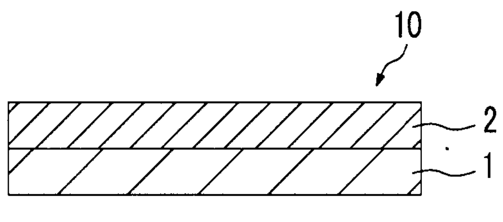


EP 3 047 967 A1

## Description

## BACKGROUND OF THE INVENTION

1. Field of the Invention

The present invention relates to a composite film and a film mirror for solar light reflection using this composite film.

2. Description of the Related Art

Recently, studies on alternative energy that substitute for fossil fuel represented by oil, coal, and natural gas have been actively performed. Particularly, natural energy such as solar light, wind power, and terrestrial heat attracts attention as clean energy which is not likely to cause depletion of resources, global warming, or the like. Among these, further development of solar energy using solar light has been expected as energy that can be reliably supplied.

Meanwhile, there is a problem that the solar energy has a low energy density. In order to solve this problem, recently, there is an attempt to concentrate solar light by using a huge reflection mirror. Until now, the reflection mirror for concentrating solar light is installed outdoors exposed to ultraviolet light caused by solar light, heat, wind and rain, dust, or the like, and thus a reflection mirror made of glass has been used. However, the reflection mirror made of glass has excellent weather resistance, but there is a problem that the reflection mirror made of glass has to be improved in handling properties, since the reflection mirror made of glass is heavy, easily broken, and lacks flexibility.

In addition, in a case where a mirror made of glass is used, there are problems such as the mirror is broken when being transferred, and a construction cost increases since a high strength is required for a frame in which the mirror is installed.

In order to solve these problems, recently, it is suggested that the mirror made of glass is substituted with a resin reflection sheet (film mirror).

In the case of the film mirror is exposed to the outdoor environment, there is a problem that contaminants such as dust adhere to the film mirror, therefore cause decreasing reflection properties.

Here, it is suggested that the outermost surface of the film mirror is to be hydrophilic so that stains are not likely to adhere and the stains are easily removed by washing.

For example, JP2012-8166A discloses "a film mirror for solar power generation including a silver reflection layer and including an easily adhesive layer and a hydrophilic layer on a resin substrate provided on a surface layer side, in which the hydrophilic layer contains (A) a hydrophilic polymer, (B) any one selected from a metal alkoxide compound expressed by General Formula (1) below and a metal alkoxide compound expressed by General Formula (2) below, and (C) a colloidal silica.

$$Z\text{-}(OR^9)_4 \qquad (1)$$

$$Al\text{-}(OR^9)_3 \qquad (2)$$

(Z represents Si, Ti, or Zr. R9 represents an alkyl group or an aryl group.)" (Claim 1).

## SUMMARY OF THE INVENTION

The present inventors have reviewed the film mirror disclosed in JP2012-8166A and have clearly understood that flexibility is not sufficient, scratches are easily formed, and scratch resistance is not sufficient compared with glass, since the hydrophilic layer is formed as a hard coat layer.

Here, an object of the invention is to provide a composite film and a film mirror for solar light reflection to which dust and the like is not likely to adhere, of which scratch resistance against dust and the like is excellent, and of which cleaning properties of adhered dust and the like are excellent.

In addition, in the description below, the property that dust or the like is not likely to adhere is referred to as "dust adhesion resistance", the resistance to scratch due to dust or the like is referred to as "dust scratch resistance" and the cleaning properties of dust or the like is referred to as "dust cleaning properties".

The present inventors have intensively researched to achieve the objects above and as a result, they have found that a composite film having excellent dust adhesion resistance, dust cleaning properties and dust scratch resistance can be obtained when an elastic recovery rate of a surface covering layer to be 60% or greater, a surface hardness thereof to be 100 N/mm$^2$ or less and a water contact angle of the surface thereof to be 40° or less, thereby completing the present invention.

That is, the present inventors have found that the above objects are achieved by the following configurations.

[1] A composite film including: a support; and a surface covering layer, in which an elastic recovery rate of the surface covering layer is 60% or greater, a surface hardness thereof is 100 $N/mm^2$ or less, and a water contact angle of a surface thereof is 40° or less.
[2] The composite film according to [1], in which the surface covering layer includes a polymer of at least one urethane (meth)acrylate monomer.
[3] The composite film according to [1] or [2], in which the surface covering layer includes at least one polymer of a monomer having a polyrotaxane structure.
[4] The composite film according to any one of [1] to [3], in which the surface covering layer is formed by being photocured with UV exposure with a converted light amount of 95 $mJ/cm^2$ or greater.
[5] The composite film according to any one of [1] to [4], in which the surface covering layer is formed by curing a composition including an $\alpha$-hydroxyketone-based photopolymerization initiator and an $\alpha$-aminoketone-based photopolymerization initiator.
[6] A film mirror for solar light reflection including: a support; a metal reflection layer; and a surface covering layer, in which an elastic recovery rate of the surface covering layer is 60% or greater, a surface hardness thereof is 100 $N/mm^2$ or less, and a water contact angle of a surface thereof is 40° or less.
[7] The film mirror for solar light reflection according to [6], in which the surface covering layer includes a polymer of at least one urethane (meth)acrylate monomer.
[8] The film mirror for solar light reflection according to [6] or [7], in which the surface covering layer includes at least one polymer of a monomer having a polyrotaxane structure.
[9] The film mirror for solar light reflection according to any one of [6] to [8], in which the surface covering layer is formed by being photocured with UV exposure with a converted light amount of 95 $mJ/cm^2$ or greater.
[10] The film mirror for solar light reflection according to any one of [6] to [9], further including: an ultraviolet absorption layer between the metal reflection layer and the surface covering layer.
[11] The film mirror for solar light reflection according to [10], in which the ultraviolet absorption layer includes at least one ultraviolet absorber having B/A of 0.5 or less and C/A of 0.1 or less, where A represents an absorbance at the wavelength of 340 nm, B represents an absorbance at the wavelength of 365 nm, and C represents an absorbance at the wavelength of 400 nm.
[12] The film mirror for solar light reflection according to any one of [6] to [11], in which the surface covering layer is formed by curing a composition including an $\alpha$-hydroxyketone-based photopolymerization initiator and an $\alpha$-aminoketone-based photopolymerization initiator.

As described below, according to the present invention, it is possible to provide a composite film and a film mirror for solar light reflection, to which dust and the like is not likely to adhere, of which scratch resistance against dust and the like is excellent, and of which cleaning properties of adhered dust and the like are excellent.

Since the film mirror of the invention has characteristics of excellent dust adhesion resistance and excellent dust scratch resistance as well as excellent durability, the film mirror of the invention can be suitably used particularly as a film mirror for solar light reflection that is exposed to heat, wind and rain, dust, or the like for a long period of time.

## BRIEF DESCRIPTION OF THE DRAWINGS

Fig. 1 is a sectional view schematically illustrating an example of an embodiment of a composite film (first aspect) according to the invention.
Fig. 2 is a sectional view schematically illustrating an example of an embodiment of a film mirror for solar light reflection (second aspect) according to the invention.
Fig. 3 is a sectional view schematically illustrating another example of the embodiment of the film mirror for solar light reflection (second aspect) according to the invention.
Fig. 4 is a sectional view schematically illustrating a suitable example of a film mirror according to the invention.

## DESCRIPTION OF THE PREFERRED EMBODIMENTS

[First aspect]

A composite film according to a first aspect of the invention is a composite film (laminate) including a support and a surface covering layer, of which an elastic recovery rate of the surface covering layer is 60% or greater, a surface

hardness thereof is 100 $N/mm^2$ or less, and a water contact angle of the surface thereof is 40° or less.

Subsequently, an outline of the composite film according to the first aspect of the invention is described by using Fig. 1.

Fig. 1 is a sectional view schematically illustrating an example of an embodiment of the composite film (first aspect) according to the invention.

A composite film 10 illustrated in Fig. 1 has a support 1 and a surface covering layer 2.

In addition, a layer configuration of the composite film according to the first aspect is not particularly limited. For example, if necessary, a primer layer or an adhesive layer may be provided between respective layers, or a back coat layer may be provided on an adherend side.

[Second aspect]

The film mirror for solar light reflection (hereinafter, also simply referred to as a "film mirror") according to the second aspect of the invention is a film mirror for solar light reflection having a support, a metal reflection layer, and a surface covering layer, of which an elastic recovery rate of the surface covering layer is 60% or greater, a surface hardness thereof is 100 $N/mm^2$ or less, and a water contact angle of a surface thereof is 40° or less. That is, the film mirror for solar light reflection is a laminate further applying the metal reflection layer to the composite film according to the first aspect and having the surface covering layer as an outermost surface layer.

Here, the "outermost surface layer" refers to a layer provided on the most light incident side.

Subsequently, the outline of the film mirror for solar light reflection according to the second aspect of the invention is described with reference to Figs. 2 and 3.

Figs. 2 and 3 are sectional views schematically illustrating examples of the embodiment of the film mirror for solar light reflection (second aspect) according to the invention.

A film mirror 20 illustrated in Fig. 2 is a laminate having the support 1, a metal reflection layer 3, and the surface covering layer 2, in this sequence.

In another case, the film mirror 20 illustrated in Fig. 3 is a laminate having the metal reflection layer 3, the support 1, and the surface covering layer 2, in this sequence.

In addition, the layer configuration of the laminate according to the second aspect is not particularly limited. For example, if necessary, a primer layer or an adhesive layer may be provided between respective layers, or a back coat layer may be provided on an adherend side.

For example, with respect to the aspect illustrated in Fig. 2, a protective layer for protecting the surface of the metal reflection layer 3 may be provided between the metal reflection layer 3 and the surface covering layer 2, or an ultraviolet absorption layer 4 may be provided between the metal reflection layer 3 and the surface covering layer 2, as illustrated in Fig. 4.

In addition, according to the aspect illustrated in Fig. 3, a coating layer (not illustrated) for protecting the metal reflection layer 3 may be provided on the surface on the opposite side of the support I of the metal reflection layer 3.

Subsequently, with respect to the respective configurations of the composite film according to the first aspect of the invention and the film mirror for solar light reflection according to the second aspect, materials, dimensions, and the like are described.

<Support>

The support included in the composite film according to the invention is not particularly limited. And in view of flexibility and weight reduction, the examples of the constituent materials for support include a resin film formed to be a film shape with glass epoxy, polyester, polyimide, thermal curing-type polyphenylene ether, polyamide, polyaramid, a liquid crystal polymer, and the like; a glass film; paper; and the like. Among these, in view of excellent handleability, a resin film (resin support) is preferable.

As a resin material in the resin film, all resins that can be formed to be a film shape can be used. Examples thereof suitably include a phenol resin, an epoxy resin, a polyimide resin, a bismaleimide triazine (BT) resin, a polyphenylene ether (PPE) resin, a tetrafluoroethylene resin, a liquid crystal resin, a polyester resin, polyethylene naphthalate(PEN), an aramid resin, a polyamide resin, polyether sulfone, triacetyl cellulose, polyvinyl chloride, polyvinylidene chloride, polyethylene, polypropylene, polystyrene, polybutadiene, and polyacetylene. Among these, a polyimide resin and a polyester resin are preferable.

According to the invention, the form of the support may be all shapes, as long as the shapes are required as various film substrates such as a flat surface, a diffusion surface, a concave surface, and a convex surface.

On the other hand, the thickness of the support is preferably about 10 μm to 5 mm, more preferably 20 μm to 1 mm, and still more preferably 25 μm to 500 μm, in view of workability and formability at the time of production.

In addition, according to the invention, the support may be subjected to a surface treatment in advance, in order

to easily form an arbitrary resin layer described below on the support.

Examples of the surface treatment include a treatment for biodegrading the surface such as UV irradiation, an ozone treatment, a plasma treatment, a corona treatment, and a flame treatment; a treatment in an alkaline solution such as hydrazine, N-methylpyrrolidone, a sodium hydroxide solution, and a potassium hydroxide solution; and a treatment in an acidic solution such as a sulfuric acid, a hydrochloric acid, and a nitric acid.

In addition, examples of a treatment of removing a stain on a support surface include a treatment using an organic solvent such as methanol, ethanol, toluene, ethyl acetate, and acetone; and a water washing treatment for removing an adhered waste.

These surface treatments may be performed by combining plural types.

Further, according to the invention, in a case where the metal reflection layer described below is provided and used as a film mirror, the surface roughness (Ra) of the support is preferably 50 nm or shorter, more preferably 20 nm or shorter, and still more preferably 5 nm or shorter in view of improvement of reflectivity.

<Surface covering layer>

The surface covering layer included in the laminate according to the invention has an elastic recovery rate of 60% or greater, a surface hardness of 100 $N/mm^2$ or less, and a water contact angle of the surface of 40° or less.

(Recovery elasticity rate)

The elastic recovery rate of the surface covering layer is measured with a maximum load of 1 mN (a load is applied for 10 seconds to become a maximum load) by a nano indentation method conforming to ISO 14577-1 (instrumentation indentation hardness). Specifically, the "maximum indentation depth (hmax)" and the "indentation depth (hf) after the load is unloaded" are measured, and the elastic recovery rate is calculated from (hmax-hf)/(hmax).

The maximum indentation depth (hmax) is indentation depth when the maximum load is maintained.

The indentation depth (hf) after the load is removed is an indentation depth (impression depth) after 10 seconds has passed since the load is completely removed.

For example, the indentation depth can be measured by using a micro hardness meter (DUH-201 S, manufactured by Shimadzu Corporation).

(Surface hardness)

The surface hardness of the surface covering layer refers to Martens hardness measured with a maximum load of 1 mN (a load is applied for 10 seconds to become a maximum load) by the nano indentation method in conformity with ISO 14577-1 (instrumentation indentation hardness).

For example, the surface hardness can be measured by using a micro hardness meter (DUH-201 S, manufactured by Shimadzu Corporation).

(Water contact angle)

The water contact angle of the surface of the surface covering layer refers to a static contact angle to the water dripped onto the surface and the static contact angle to the water is measured based on JIS-R3257 by using a contact angel meter.

For example, the water contact angle can be measured by using a contact angel meter (DM-500, manufactured by Kyowa Interface Science Co., Ltd.).

Since the composite film and the film mirror for solar light reflection according to the invention have such a surface covering layer, dust scratch resistance, dust adhesion resistance, and cleaning properties are excellent and thus durability becomes satisfactory.

Details thereof are not clear, but the present inventors have presumed as follows.

That is, since the hardness of the surface covering layer surface is 100 $N/mm^2$ or less, shock resistance to dust or the like becomes satisfactory. Since the elastic recovery rate of the surface covering layer is 60% or greater, scratches by dust or the like in micro areas are self-recovered.

Further, as a layer of water molecules is formed on the surface since the water contact angle of the surface is 40° or less, the electrostatic properties of the surface are reduced thus dust or the like is not likely to be adhered and washing water is spread on the surface to wet the surface thus cleaning properties become satisfactory.

According to the invention, since the dust scratch resistance of the composite film and the film mirror becomes more satisfactory and durability also becomes more satisfactory, the hardness of the surface covering layer is preferably 1 $N/mm^2$ to 70 $N/mm^2$ and more preferably 1 $N/mm^2$ to 50 $N/mm^2$.

And for the same reasons as described above, the elastic recovery rate of the surface covering layer is preferably greater than 62.0%, more preferably 70% to 100%, and still more preferably 80% to 100%.
In addition, according to the invention, since the dust adhesion resistance and the cleaning properties are more satisfactory, the water contact angle of the surface covering layer is preferably 1° to 40° and more preferably 1° to 20°.
In addition, according to the invention, the thickness of the surface covering layer is not particularly limited. However, since the dust scratch resistance of the composite film and the film mirror becomes more satisfactory and the durability also becomes more satisfactory, the thickness is preferably 1 μm to 50 μm and more preferably 3 μm to 30 μm.

(Forming material)

The forming material of the surface covering layer is not particularly limited, as long as the surface covering layer is a layer of which the elastic recovery rate is 60% or greater, the surface hardness is 100 $N/mm^2$ or less, and the water contact angle of the surface is 40° or less.
Specifically, it is possible to form a layer of which the elastic recovery rate is 60% or greater, the surface hardness is 100 $N/mm^2$ or less, and the water contact angle of the surface is 40° or less, by adding a hydrophilizing agent to the resin material which satisfies the elastic recovery rate and the surface hardness.

(Resin material)

Specific examples of the resin material include a photosetting resin such as an urethane (meth)acrylate resin, a polyester (meth)acrylate resin, a silicone (meth)acrylate resin, an epoxy (meth)acrylate resin, and polyrotaxane; a thermosetting resin such as an urethane resin, a phenol resin, an urea resin, a phenoxy resin, a silicone resin, a polyimide resin, a diallyl phthalate resin, a furan resin, a bismaleimide resin, and a cyanate resin; a polyvinyl acetal resin, polyvinyl alcohol resin, polyvinyl chloride resin, a saturated polyester resin, and a polyrotaxane resin, melamine resin. These may be used singly or two or more types thereof may be used in combination.
In addition, the expression of "(meth)acrylate" in the photosetting resin is an expression indicating acrylate or methacrylate.
Among these, the photosetting resin is preferably used, and since the hardness of the composite film (film mirror) is easily adjusted, the photosetting resin is more preferably the urethane (meth)acrylate resin.
Examples of the urethane (meth)acrylate resin suitably include a product obtained by reacting a polyesterpolyol (A) with a polyisocyanate (B) to synthesize an isocyanate group-terminated urethane prepolymer and thereafter reacting the resultin urethane prepolymer with a hydroxy group-containing (meth)acrylate compound (C); and a polymer of an acryl resin having a hydroxyl group and isocyanate.
Here, the polyesterpolyol (A) can be obtained by causing a polybasic acid and polyhydric alcohol to react with each other, and specific examples thereof include polytetramethylene glycol (PTMG), polyoxypropylene diol (PPG), and polyoxyethylene diol.
In addition, the polyisocyanate (B) is not particularly limited, as long as the polyisocyanate (B) is polyisocyanate having 2 or more isocyanate groups in a molecule, and specific examples thereof include 2,4-tolylene diisocyanate (TDI), diphenylmethane diisocyanate (MDI), hexamethylene diisocyanate (HDI), isophorone diisocyanate (IPDI), and xylylene diisocyanate (XDI).
In addition, specific examples of the hydroxy group-containing (meth)acrylate compound (C) include 2-hydroxyethyl (meth)acrylate, 2-hydroxypropyl (meth)acrylate, 4-hydroxybutyl (meth)acrylate, glycidol di(meth)acrylate, and pentaerythritol triacrylate.
As the urethane (meth)acrylate resin synthesized by using the polyesterpolyol (A), the polyisocyanate (B) and the hydroxy group-containing (meth)acrylate compound (C), commercially available products can be used. Specifically, an ultraviolet light curing-type urethane acrylate resin manufactured by The Nippon Synthetic Chemical Industry Co., Ltd., for example, UV1700B, UV6300B, and UV7600B, can be used.
Meanwhile, the polymer of the acryl resin having the hydroxyl group and isocyanate can be prepared by the methods disclosed in claims 2 and 3 and paragraphs "0142" to "0148" of JP2012-25821A.
In addition, the polyrotaxane is a molecular complex in which block groups are disposed at both terminals of pseudo-polyrotaxane (both terminals of the straight chain molecule) obtained by piercing apertures of cyclic molecules in a skewer shape by a straight chain molecule and plural cyclic molecules accordingly to enclose the straight chain molecule, such that the cyclic molecules are not separated.
In addition, in this specification, polyrotaxane is a concept including a crosslinked body in which the molecular complexes are crosslinked to each other in the cyclic molecule portion and a polymer obtained by polymerizing the molecular complex and another monomer or another polymer, in addition to the molecular complex.

(Hydrophilizing agent)

The hydrophilizing agent is not particularly limited as long as the water contact angle of the surface covering layer can be 40° or less.
Here, according to the invention, the hydrophilizing agent is an agent that decreases a water contact angle of the coated or cured surface covering layer surface by being dissolved or dispersed in the surface covering layer coating liquid.
Here, depending on the combination of the resin material and the hydrophilizing agent, the hydrophilizing agent may bleed out. Therefore, it is preferable to use the hydrophilizing agent that does not bleed out even if the hydrophilizing agent is combined with the resin material.
Examples of the hydrophilizing agent that is suitable for the combination with the resin material include PANDEX EXP. HXLV-05 (manufactured by DIC Corporation), ELEC ME-20 (manufactured by Kao Corporation), ARQUAD T-50 (manufactured by Lion Corporation), and ARQUAD C-50 (manufactured by Lion Corporation).
For example, in a case where an urethane (meth)acrylate resin is used as the resin material, PANDEX EXP. HXLV-05 (manufactured by DIC Corporation), ELEC ME-20 (manufactured by Kao Corporation), ARQUAD T-50 (manufactured by Lion Corporation), ARQUAD C-50 (manufactured by Lion Corporation), and the like are preferably used as the hydrophilizing agent.
In addition, in a case where polymerizable polyrotaxane is used as the resin material, PANDEX EXP. HXLV-05 (manufactured by DIC Corporation), ELEC ME-20 (manufactured by Kao Corporation), and the like are preferably used as the hydrophilizing agent.

(Forming method)

According to the invention, the method of forming the surface covering layer is not particularly limited, but examples thereof include a method of coating a curable composition (composition for forming a surface covering layer (coating liquid)) containing a hydrophilizing agent together with the resin material on the surface of the support or a metal reflection layer (or an ultraviolet absorption layer described below) described below and performing photocuring by irradiating ultraviolet light or thermal curing by heating.
As the method of coating the curable composition, a well-known coating method in the related art such as a gravure coating method, a reverse coating method, a die coating method, a blade coater, a roll coater, an air knife coater, a screen coater, a bar coater, and a curtain coater can be used.
Here, it is preferable that the surface covering layer is formed by performing photocuring by UV exposure with a converted light amount of 95 $mJ/cm^2$ or greater.
If the surface covering layer is formed by performing photocuring by the UV exposure with the converted light amount of 95 $mJ/cm^2$ or greater, it is preferable that the surface covering layer can be cured in a short period of time, and thus productivity can be improved.

(Solvent and additive)

Here, the curable composition may include a solvent or various types of additives, in addition to the components described above.
As the solvent, for example, a solvent such as hydrocarbons, halogenated halides, ethers, esters, and ketones can be used. Specifically, xylene and dibutyl ether can be suitably used.
In addition, examples of the additive include a polymerization initiator, an anti-static agent, a leveling agent, an ultraviolet absorber, a light stabilizer, an antioxidant, an antifoaming agent, a thickener, an anti-settling agent, a pigment, a dispersant, and silane coupling.

(Polymerization initiator)

The polymerization initiator to be added to the curable composition is not particularly limited, and various well-known polymerization initiators can be used depending on the resin material.
Here, according to the invention, it is preferable that the surface covering layer is formed by curing a curable composition including an $\alpha$-hydroxyketone-based photopolymerization initiator and an $\alpha$-aminoketone-based photopolymerization initiator.
Since the entire of the surface covering layer is evenly cured, by using the $\alpha$-hydroxyketone-based photopolymerization initiator which is satisfactorily curable on the surface and the $\alpha$-aminoketone-based photopolymerization initiator which is satisfactorily curable in the inner portion, the elastic recovery rate of the surface covering layer becomes even, and thus the scratch resistance becomes more satisfactory.

(Leveling agent)

As the leveling agent to be added to the curable composition, a non-fluorine-based surfactant is preferably used.

Generally, as the leveling agent when the composition is applied, the fluorine-based surfactant is used. However, if the fluorine-based surfactant is used, fluorine is unevenly dispersed on the surface of the layer. Therefore, even if the hydrophilizing agent is added, the water contact angle of the surface does not decrease but increases.

In contrast, as the leveling agent to be added to the curable composition, if the non-fluorine-based surfactant is used, the coating of the curable composition becomes easy, and also the water contact angle of the surface of the surface covering layer can be prevented from increasing.

Otherwise, according to the invention, it is preferable that the leveling agent is not added to the curable composition.

Other additives are specifically described below.

<Metal reflection layer>

The metal reflection layer used in the second aspect is a layer having a function of reflecting light incident from the surface covering layer side which is the outermost surface layer.

The metal reflection layer is directly provided on the support or provided through a resin layer (resin intermediate layer), which is provided if desired.

The forming material of the metal reflection layer is not particularly limited, as long as the material is a metal material that reflects visible light and infrared light. Examples thereof include silver and aluminum. In view of reflection properties of light, silver or an alloy including silver is preferable. Silver or the alloy including silver can increase the reflectivity in a visible light area of the composite film and decrease dependency of the reflectivity due to an incident angle. The visible light area represents a wavelength area of 400 nm to 700 nm. Here, the incident angle denotes an angle with respect to a vertical line to the layer surface.

Since durability of the metal reflection layer increases, the silver alloy may include one or more types of metal selected from metal of the group consisting of other metal, such as gold, palladium, copper, nickel, iron, gallium, indium, titanium, and bismuth, in a range in which the reflection characteristics of the metal reflection layer are not influenced. As the silver alloy, an alloy of silver and one or more types of metal selected from gold, copper, nickel, iron, and palladium is particularly preferable in view of resistance to moist heat, reflectivity, and the like.

For example, in a case where the metal reflection layer is a layer made of a silver alloy, the content of silver is preferably 90 at% to 99.8 at% with respect to total (100 at%) of silver and other metal in the metal reflection layer. In addition, the content of the other metal is preferably 0.2 at% to 10 at% in view of durability.

The surface roughness (Ra) of the metal reflection layer is preferably 20 nm or shorter, more preferably 10 nm or shorter, and still more preferably 5 nm or shorter. It is possible to raise the reflectivity of the composite film and effectively concentrate the solar light in the case of the surface roughness in the range described above.

According to the invention, the thickness of the metal reflection layer is not particularly limited. However, in view of reflectivity or the like, the thickness is preferably 50 nm to 500 nm and preferably 100 nm to 300 nm.

In addition, the shape of the metal reflection layer is not particularly limited, and the shape may be a layer covering the entire main surface of the resin substrate or a layer covering a portion of the main surface.

(Method of forming metal reflection layer)

The method of forming the metal reflection layer is not particularly limited, and any one of a dry method or a wet method may be employed. Examples of the wet method include an electroplating method. Examples of the dry method include a vacuum evaporation method, a sputtering method, and an ion plating method.

Hereinafter, a case where the metal reflection layer is formed by an electroplating method is described. As the electroplating method, a well-known method in the related art can be used. In a case where a plating coating polymer layer described below is formed on the support, metal particles included in the plating coating polymer layer function as an electrode. Therefore, the metal reflection layer having excellent adhesion properties to the support can be formed by performing electroplating on the plating coating polymer layer. Examples of the metal compound used for plating include silver compounds such as silver nitrate, silver acetate, silver sulfate, silver carbonate, silver methane sulfonate, ammonium silver, silver cyanide, silver thiocyanate, silver chloride, silver bromide, silver chromate, silver chloranilate, silver salicylate, silver diethyldithiocarbamate, silver diethyldithiocarbamide, and silver p-toluene sulfonate. Among these, in view of an environmental effect and smoothness, silver methane sulfonate is preferable.

In addition, as a metal underlayer, a metal layer containing other metal such as copper, nickel, chrome, and iron may be included between the plating coating polymer layer and the metal reflection layer.

In addition, the film thickness of the metal reflection layer that can be obtained by the electroplating method

can be controlled by adjusting a metal concentration included in a plating bath or current density. The reflectivity can be improved or pin holes can be reduced due to surface smoothing by inserting a metal underlayer having a proper thickness.

In view of forming a reflection film without pin holes and in view of not forming unevenness by which light is scattered on the surface of the metal reflection layer, the film thickness of the metal reflection layer is preferably 0.05 $\mu$m to 2.0 $\mu$m and more preferably 0.08 $\mu$m to 0.5 $\mu$m.

In addition, the metal reflection layer may be formed by performing dry plating such as vacuum evaporation using the plating coating polymer layer including the restored metal particles. According to this method, since the surface of the plating coating polymer layer is covered with metal, it is possible to form a metal reflection layer of which adhesion properties are better than those of normal evaporation or the like, and which is strong against heat.

After electroplating, the metal reflection layer may be treated with a strong acid or strong alkaline in order to improve reflection properties or durability of the metal reflection layer. In addition, an inorganic film or a metal oxide film may be formed on the metal reflection layer surface. In addition, a decoloration inhibitor layer containing a decoloration inhibitor may be provided in the metal reflection layer surface. The decoloration inhibitor layer has a function of decoloration prevention of the metal reflection layer. Examples of the decoloration inhibitor include a decoloration inhibitor based on thioether, thiol, a Ni-based organic compound, benzotriazole, imidazole, oxazole, tetrazaindene, pyrimidine, and thiadiazole. The decoloration inhibitor layer is roughly divided, and a compound having an adsorbing group that adsorbs metal or antioxidant is preferably used.

<Resin layer>

The film mirror according to the invention has a metal reflection layer on the resin support, but an arbitrary resin layer (resin intermediate layer) may be included therebetween in order to improve adhesion properties between the resin support and the metal reflection layer.

Examples of the resin layer include an adhesive layer for causing metal to easily adhere and a plating coating polymer layer which is useful in a case where the metal reflection layer is formed by a plating method. These layers may have a single layer configuration or a multiple layer configuration with two or more layers.

(Adhesive layer)

The adhesive layer is a layer for improving adhesiveness between the support and the metal reflection layer. In addition, in a case where the plating coating polymer layer described below is formed on the adhesive layer, the adhesive layer improves adhesiveness between the support and the plating coating polymer layer, and, as a result, the adhesiveness between the support and the metal reflection layer is more improved.

In view of adhesiveness with the neighboring support, the adhesive layer preferably includes the same resin as the resin forming the support or a resin having affinity with the resin forming the support. The resin included in the adhesive layer may be, for example, a thermosetting resin or a thermoplastic resin, or a mixture thereof. Examples of the thermosetting resin include an epoxy resin, a phenol resin, a polyimide resin, a polyester resin, a bismaleimide resin, a melamine resin, and an isocyanate-based resin. Examples of the thermoplastic resin include a polyolefin resin, a phenoxy resin, polyethersulfone, polysulfone, polyphenylenesulfone, polyphenylenesulfide, polyphenyl ether, and polyetherimide. The thermoplastic resin and the thermosetting resin may be used singly or two or more types thereof may be used in combination. The combination of two or more resins can be performed for the purpose of exhibiting the more excellent effect by causing respective defects to be compensated with each other.

In a case where the adhesive layer is provided between the plating coating polymer layer and the support, it is preferable that the adhesive layer includes an active species that generates an active site that causes interaction between a functional group that interacts with a metal precursor and a high molecular compound having a polymerizable group, which are included in the plating coating polymer layer described below. As the adhesive layer, for example, a polymerization initiating layer containing a radical polymerization initiator or a polymerization initiating layer made of the resin having a functional group that can initiate polymerization is preferable. More specifically, as the adhesive layer, a layer including a high molecular compound and a radical polymerization initiator, a layer including a polymerizable compound and a radical polymerization initiator, or a layer formed of a resin having a functional group that can initiate polymerization is preferable. Examples of the layer made of the resin having the functional group that can initiate the polymerization include polyimide having a polymerization initiating portion in a skeleton, which is disclosed in paragraphs "0018" to "0078" of JP2005-307140A.

Further, a compound having a polymerizable double bond for proceeding with crosslinkage in the layer when the adhesive layer is formed, specifically, an acrylate compound, and a methacrylate compound may be used, and a polyfunctional compound is particularly preferable. In addition, as the compound having a polymerizable double bond, a resin obtained by (meth)acrylating a portion of a thermosetting resin or a thermoplastic resin, for example, an epoxy resin, a phenol resin, a polyimide resin, a polyolefin resin, and a fluorine resin by using a methacrylic acid or an acrylic

acid may be used.

Without deteriorating the effect of the invention, one type or two or more types of various additives such as an adhesiveness giving agent, a silane coupling agent, an antioxidant, and an ultraviolet absorber may be added, if necessary.

Generally, the thickness of the adhesive layer is preferably in the range of 0.1 μm to 10 μm and more preferably in the range of 0.2 μm to 5 μm.

(Plating coating polymer layer)

In a case where the metal reflection layer is formed by metal plating, a plating coating polymer layer is preferably provided between the metal reflection layer and the support. The plating coating polymer layer is a layer including a component (for example, metal particles) as the electrode, when the plating (electroplating or the like) described above is performed.

The plating coating polymer used for forming the plating coating polymer layer at least includes a polymerizable group and a functional group (hereinafter, appropriately referred to as an "interactive group".) that interacts with the metal precursor. The main skeleton of the plating coating polymer is preferably an acryl polymer, polyether, acrylamide, polyamide, polyimide, an acryl polymer, and polyester, and more preferably an acryl polymer.

The plating coating polymer may include a constituent unit other than a constituent unit including a polymerizable group and a constituent unit including an interactive group, depending on the purpose. If a constituent unit (hereinafter, appropriately referred to as another constituent unit) other than the constituent unit including the polymerizable group and the constituent unit including the interactive group is included, when a composition for forming the plating coating polymer is obtained, an even plating coating polymer layer having excellent dissolving properties to water or an organic solvent can be formed.

Examples of a preferable aspect of the plating coating polymer include an acryl polymer having an acidic group as an interactive group and a polymerizable group, in a side chain. Hereinafter, a polymerizable group and an interactive group included in the plating coating polymer and characteristics thereof are described in detail.

(Polymerizable group)

The polymerizable group included in the plating coating polymer may be a functional group that can form a chemical bond between polymers or between a polymer and a support (an adhesive layer in a case where the adhesive layer is formed on the support) by energy deposition. Examples of the polymerizable group include a radical polymerizable group and a cation polymerizable group. Among these, a radical polymerizable group is preferable in view of reactivity.

Examples of the radical polymerizable group include a methacryloyl group, an acryloyl group, an itaconic acid ester group, a crotonic acid ester group, an isocrotonic acid ester group, a maleic acid ester group, a styryl group, a vinyl group, an acrylamide group, and a methacrylamide group. Among these, a methacryloyl group, an acryloyl group, a vinyl group, a styryl group, an acrylamide group, or a methacrylamide group is preferable. Among these, a methacryloyl group, an acryloyl group, an acrylamide group, or a methacrylamide group is preferable in view of radical polymerization reactivity and synthesization versatility, and an acrylamide group or a methacrylamide group is still more preferable, in view of alkaline resistance. Among these, as the polymerizable group to be introduced to an acryl polymer, various polymerizable groups such as a (meth)acryl group such as a (meth)acrylate group or a (meth)acrylamide group, and a vinyl ester group, a vinyl ether group, and an allyl ether group of a carboxylic acid are preferable.

(Interactive group)

The interactive group included in the plating coating polymer is a functional group (for example, a coordination group and a metal ion adsorptive group) that interacts with a metal precursor. A functional group that can form electrostatic interaction with a metal precursor, or a nitrogen-containing functional group, a sulfur-containing functional group, or an oxygen-containing functional group that can form coordination with a metal precursor can be used.

Specific examples of the interactive group include a nitrogen-containing functional group such as an amino group, an amide group, an imide group, an urea group, a triazole ring, an imidazole group, a pyridine group, a pyrimidine group, a pyrazine group, a triazine group, a piperidine group, a piperazine group, a pyrrolidine group, a pyrazole group, a group having an alkylamine structure, a cyano group, and a cyanate group (R-O-CN); an oxygen-containing functional group such as an ether group, a hydroxy group, a phenolic hydroxy group, a carboxyl group, a carbonate group, a carbonyl group, an ester group, a group having an N-oxide structure, a group having an S-oxide structure, a group having an N-hydroxy structure; a sulfur-containing functional group such as a thiophene group, thiol group, thiourea group, sulfoxide group, sulfonic acid group, and a group having a sulfonic acid ester structure; a phosphorus-containing functional group such as a phosphate group, a phosphoro amide group, a phosphine group, and a group containing a phosphoric

acid ester structure; and a group containing a halogen atom such as chlorine and bromine. In a functional group that can have a salt structure, salts thereof may be included.

The interactive group may be a non-dissociative functional group or may be an ionic polar group. These may be included at the same time, but the ionic polar group is preferable.

Among the interactive groups, in view of the adhesion properties to the support (an adhesive layer in a case where the adhesive layer formed on the support) of the plating coating polymer, a carboxylic acid group, a sulfonic acid group, a phosphoric acid group, or a boronic acid group is exemplified as the interactive group made of an ionic polar group. Among these, a carboxylic acid group is particularly preferable, since a carboxylic acid group has proper acidity (another functional group is not decomposited), there is less concern of influence to another functional group, affinity with a metal reflection layer is excellent, and materials thereof are easily obtained.

The ionic polar group of the carboxylic acid group or the like can be introduced to the plating coating polymer by copolymerizing a radical polymerizable compound having an acidic group. In a suitable configuration of the plating coating polymer, as the polymer having an interactive group made of a radical polymerizable group and a non-dissociative functional group, polymers disclosed in paragraphs "0106" to "0112" of JP2009-007540A can be used. In addition, as the polymer having an interactive group made of a radical polymerizable group and an ionic polar group, polymers disclosed in paragraphs "0065" to "0070" of JP2006-135271A can be used. As the polymer having a radical polymerizable group, an interactive group made of a non-dissociative functional group, and an interactive group made of the ionic polar group, polymers disclosed in paragraphs "0010" to "0128" of JP2010-248464A, JP2010-84196A, and paragraphs "0030" to "0108" of US2010/080964A can be used.

In addition, the metal precursor described below may be provided after the plating coating polymer layer is formed, or may be contained in the composition for forming the plating coating polymer layer in advance.

In order to improve sensitivity to energy deposition, the plating coating polymer layer preferably includes a radical polymerization initiator such as a photopolymerization initiator and a thermal polymerization initiator. The radical polymerization initiator is not particularly limited, and a well-known initiator is generally used. However, according to the energy deposition, in a case where the plating coating polymer can generate an active site that interacts with the support or the adhesive layer, that is, a polymer having a polymerization initiating portion is included in the polymer skeleton is used, these radical polymerization initiators may not be added.

The amount of the radical polymerization initiator contained in the composition for forming the plating coating polymer layer is selected depending on the configuration of the composition for forming the plating coating polymer layer, but the amount is preferably about 0.05 mass% to 30 mass% and more preferably about 0.1 mass% to 10.0 mass% in the composition for forming the plating coating polymer layer.

The plating coating polymer layer can be formed by coating a composition for forming a polymer layer including a plating coating polymer on a support (on an adhesive layer in a case where the adhesive layer is formed on the support) and depositing energy. In a case where the plating coating polymer layer is directly provided on the support, an easy adhesion treatment of depositing energy on the surface of the support in advance is preferably performed. The method providing the plating coating polymer layer on the support is not particularly limited, and examples thereof include a method of immersing the support in the composition for forming the plating coating polymer layer including the plating coating polymer and a method of coating the composition for forming the plating coating polymer layer including the plating coating polymer on the support. Since the thickness of the obtained plating coating polymer layer is easily controlled, a method of coating the composition for forming the plating coating polymer layer including the plating coating polymer on the support is preferable.

In view of sufficient interaction forming properties with the metal precursor described below, the coating amount of the composition for forming the polymer surface including the plating coating polymer is preferably 0.05 $g/m^2$ to 10 $g/m^2$, and particularly more preferably 0.3 $g/m^2$ to 5 $g/m^2$ in terms of the solid content. The coating liquid of the composition for forming the plating coating polymer layer including the plating coating polymer applied to the support or the like is preferably dried for 1 second to 2 hours at 20°C to 60°C and thereafter dried for 1 second to 2 hours at a temperature of greater than 60°C and more preferably dried for 1 second to 20 minutes at 20 °C to 60°C and thereafter dried for 1 second to 20 minutes at a temperature of greater than 60°C.

An interaction between polymerizable groups included in a polymer in an energy deposition area or between a polymerizable group included in a polymer and the support (the adhesive layer in a case where the adhesive layer formed on the support) is formed by depositing energy after the composition for forming the plating coating polymer layer comes into contact with the support (an adhesive layer in a case where the adhesive layer is formed on the support) such that a fixed plating coating polymer layer is formed on the support (on the adhesive layer in a case where the adhesive layer is formed on the support). Accordingly, the support and the plating coating polymer layer strongly adhere to each other.

Examples of the energy deposition method include heating and exposure. Specifically, the energy deposition method by exposure can be performed by light irradiation of a UV lamp, a visible light, or the like. Examples of of the light resource used in the exposure include a mercury lamp, a metal halide lamp, a xenon lamp, a chemical lamp, and

the like. Examples of the radioactive ray include an electron beam, an X ray, an ion beam, an ion beam, and a far infrared ray. In addition, a g ray, an i ray, Deep-UV light, and a high density energy beam (a laser beam) can be also used. In order to easily proceed with the polymerization and prevent decomposition of the polymer, or cause a polymer to forms satisfactory interaction, the exposure power is preferably in the range of 10 $mJ/cm^2$ to 8000 $mJ/cm^2$ and more preferably in the range of 100 $mJ/cm^2$ to 3000 $mJ/cm^2$. In addition, the exposure may be performed in an atmosphere in which the oxygen concentration is suppressed to 600 ppm or shorter or preferably 400 ppm or shorter by performing substitution with inert gas such as nitrogen, helium, and carbon dioxide.

The energy deposition by heating may be performed, for example, by a general thermal heat roller, a laminator, a hot stamp, an electric heating plate, a thermal head, a laser, an air dryer, an oven, a hot plate, an infrared dryer, or a heating drum. In addition, in a case where the energy deposition is performed by heating, the temperature thereof is preferably in the range of 20°C to 200°C and more preferably in the range of 40°C to 120°C in order to easily proceed polymerization or in order to prevent thermal modification of the support.

After the energy deposition, a step of removing an unreacted polymer is further provided appropriately. The film thickness of the plating coating polymer layer is not particularly limited, but, in view of adhesion properties to the support, the film thickness is preferably 0.05 μm to 10 μm and more preferably 0.3 μm to 5 μm. In addition, in view of reflection properties, the surface roughness (Ra) of the plating coating polymer layer obtained by the method is preferably 20 nm or shorter and more preferably 10 nm or shorter.

The plating coating polymer layer includes restored metal particles. The restored metal particles included in the plating coating polymer layer can be obtained by providing a metal precursor to a plating coating polymer layer, restoring the metal precursor, and causing the metal precursor to become restored metal particles. If the metal precursor is provided to the plating coating polymer layer, the metal precursor adheres to the interactive group by interaction.

The metal precursor used in the invention is not particularly limited, as long as the metal precursor functions as an electrode by being changed to metal by restoration reaction. In addition, examples of the metal precursor preferably include a metal precursor that functions as a plating electrode in the forming of the metal reflection layer. Therefore, the metal precursor preferably functions as an electrode by being restored to metal. Specifically, a metal ion such as Au, Pt, Pd, Ag, Cu, Ni, Al, Fe, and Co is used. The metal ion which is a metal precursor is included in the composition (the composition for forming the plating coating polymer layer) including the plating coating polymer and becomes zerovalent metal particles due to the restoration reaction, after a layer is formed on the support. The metal ion which is the metal precursor preferably is included in the composition for forming the plating coating polymer layer as a metal salt.

As the metal ion, in view of types, the number, and catalyst performances of coordinatable functional groups, an Ag ion, a Cu ion, and a Pd ion are preferable. As the Ag ion, an Ag ion in which a silver compound is decomposed can be suitably used. Specific examples of the silver compound include silver nitrate, silver acetate, silver sulfate, silver carbonate, silver cyanide, silver thiocyanate, silver chloride, silver bromide, silver chromate, silver chloranilate, silver salicylate, silver diethyldithiocarbamate, silver diethyldithiocarbamide, and silver p-toluene sulfonate. Among these, in view of water solubility, silver nitrate is preferable. In a case where the Cu ion is used, a Cu ion in which the copper compound as described above is decomposed can be suitably used. Specific examples of the copper compound include copper nitrate, copper acetate, copper sulfate, copper cyanide, copper thiocyanate, copper chloride, copper bromide, copper chromite, copper chloranil, copper salicylate, copper diethyldithiocarbamate, copper diethyldithiocarbamide, and copper p-toluene sulfonate. Among these, copper sulfate is preferable in view of water solubility.

The metal precursor is preferably provided to the plating coating polymer layer as the dispersion liquid or the solution (metal precursor liquid). Examples of the providing method include a method of coating the metal precursor liquid on the support having the plating coating polymer layer and a method of immersing the support including the plating coating polymer layer in the metal precursor liquid.

In a case where the metal precursor liquid is used for providing the metal precursor to the plating coating polymer layer, the particle diameter of the metal precursor is preferably 1 nm to 200 nm, more preferably 1 nm to 100 nm, and still more preferably 1 nm to 60 nm. It is possible to control the particle diameters of the restored metal particles to be in the desired size by causing the particle diameter to be in the range described above.

The metal ion which is the metal precursor provided to the plating coating polymer layer is restored by a metal activating liquid (restoration liquid). The metal activating liquid is made of a restoration agent that can restore a metal precursor (mainly a metal ion) to zerovalent metal and a pH regulation agent for activating the restoration agent. The concentration of the restoration agent to the entire metal activating liquid is preferably 0.05 mass% to 50 mass% and more preferably 0.1 mass% to 30 mass%. As the restoration agent, a boron-based restoration agent such as sodium borohydride and dimethylamine borane and a restoration agent such as formaldehyde and hypophosphorous acid can be used. Particularly, restoration is preferably performed by an alkaline aqueous solution containing formaldehyde.

The concentration of the pH regulation agent with respect to the entire metal activating liquid is preferably 0.05 mass% to 10 mass% and more preferably 0.1 mass% to 5 mass%.

An acetic acid, a hydrochloric acid, a sulfuric acid, a nitric acid, sodium hydrogen carbonate, ammonia water, sodium hydroxide, potassium hydroxide, and the like can be used as the pH regulation agent. The concentration at the

time of restoration is preferably 10°C to 100°C and more preferably 20°C to 70°C. The concentration or the temperature range is preferably in this range in view of the particle diameter of the metal precursor, the surface roughness of the polymer surface, the conductivity (surface resistance value), and the deterioration of the restoration liquid at the time of restoration.

The surface resistance value of the plating coating polymer layer including the restored metal particles is preferably 0.001 Ω/□ to 100 Ω/□ and more preferably 0.03 Ω/□ to 50 Ω/□. If the surface resistance value is in this range, the plating surface is evenly and smoothly formed and the reflectivity becomes satisfactory.

In addition, the surface roughness (Ra) of the plating coating polymer layer including the restored metal particles is preferably 20 nm or shorter and more preferably 10 nm or shorter in view of reflection properties.

The plating coating polymer layer including the metal particles obtained in this manner is suitably used for forming the metal reflection layer described above in a plating method which is a wet method, and the metal reflection layer formed by the plating method using the plating coating polymer layer has excellent adhesion properties to the support and excellent surface smoothness.

<Protective layer>

In the film mirror according to the invention, in order to prevent the deterioration or breakage of the metal reflection layer, the resin support, or the plating coating polymer layer provided if desired due to solar light, rain water, dust, and the like and in order to achieve stability of mirror finishing properties, an arbitrary protective layer may be provided on the surface of the metal reflection layer on the light incident side.

As the resin material used for forming the protective layer, a resin that forms a film or a layer and that has strength of the formed film or the formed layer, durability thereof, blocking properties of the air or moisture, adhesion properties to a layer adjacent to a protective layer, for example, the metal reflection layer or the surface covering layer, transparency, and high permeability to light having a wavelength particularly required to a film mirror is preferable.

Examples of the material for forming the protective layer include a photosetting resin such as an urethane (meth)acrylate resin, a polyester (meth)acrylate resin, a silicone (meth)acrylate resin, and an epoxy (meth)acrylate resin; a thermosetting resin such as an urethane resin, a phenol resin, an urea resin, a phenoxy resin, a silicone resin, a polyimide resin, a diallyl phthalate resin, a furan resin, a bismaleimide resin, and a cyanate resin; a polyvinyl acetal resin, a polyvinyl alcohol resin, a polyvinyl chloride resin, a saturated polyester resin, a polyrotaxane resin, and a melamine resin. These may be used singly or two or more types thereof may be used in combination.

Among these, a resin having an urethane bond is preferable. Specifically, a photosetting resin is more preferably used, and, since the hardness of the film mirror is easily adjusted, an urethane (meth)acrylate resin is still more preferable. Examples of the urethane (meth)acrylate resin suitably include a product that can be obtained by reacting the polyesterpolyol (A) and the polyisocyanate (B), synthesizing an isocyanate group-terminated urethane prepolymer, and reacting the hydroxy group-containing (meth)acrylate compound (C).

Here, the polyesterpolyol (A) can be obtained by reacting a polybasic acid and polyhydric alcohol, and specific examples thereof include polytetramethylene glycol (PTMG), polyoxypropylene diol (PPG), and polyoxyethylene diol.

In addition, the polyisocyanate (B) is not particularly limited, as long as the polyisocyanate includes 2 or more isocyanate groups in the molecule. Specific examples thereof include 2,4-tolylene diisocyanate (TDI), diphenylmethane diisocyanate (MDI), hexamethylene diisocyanate (HDI), isophorone diisocyanate (IPDI), and xylylene diisocyanate (XDI).

In addition, specific examples of the hydroxy group-containing (meth)acrylate compound (C) include 2-hydroxyethyl (meth)acrylate, 2-hydroxypropyl (meth)acrylate, 4-hydroxybutyl (meth)acrylate, glycidol di(meth)acrylate, and pentaerythritol tri(meth)acrylate.

As an urethane (meth)acrylate resin synthesized by using the polyesterpolyol (A), the polyisocyanate (B), and the hydroxy group-containing (meth)acrylate compound (C) described above, commercially available products can be used. Specifically, an ultraviolet light curing-type urethane acrylate resin manufactured by The Nippon Synthetic Chemical Industry Co., Ltd., such as UV1700B, UV6300B, and UV7600B, and a polymer-type acrylate manufactured by DIC Corporation, such as UNIDIC V-6840, UNIDIC V-6841, UNIDIC WHV-649, and UNIDIC EKS-675 can be used.

In addition, examples of the resin that can be used in the protective layer include a polyester resin such as a cellulose ester-based resin, a polycarbonate-based resin, polyallylate-based resin, polysulfone (including polyethersulfone)-based resin, polyethylene terephthalate, and polyethylene naphthalate, an olefin-based resin such as polyethylene and polypropylene, a cellulose diacetate resin, a cellulose triacetate resin, a cellulose acetate propionate resin, a cellulose acetate butyrate resin, polyvinyl alcohol, polyvinyl butyral, an ethylene vinyl alcohol resin, an ethylene vinyl acetate resin, and an ethylene acrylic acid ester copolymer, polycarbonate, a norbornene-based resin, a polymethylpentene resin, polyamide, a fluorine-based resin, polymethyl methacrylate, an acryl resin, a polyurethane resin, and a silicone resin. Among these, in view of adhesion properties to the protective layer and the metal reflection layer, as the resin contained in the protective layer, one or more resins selected from an acryl resin, polyvinyl butyral, an ethylene vinyl acetate resin, and an ethylene acrylic acid ester copolymer is preferable.

The thickness of the protective layer is not particularly limited. However, since the dust scratch resistance and the dust adhesion resistance become more satisfactory, the thickness is preferably 0.1 μm or longer, more preferably 1 μm or longer, still more preferably 5 μm or longer, and particularly preferably 10 μm or longer. The upper limit thereof is not particularly limited, but the upper limit thereof is preferably 100 μm or shorter and more preferably 50 μm or shorter, in general.

The method of forming the protective layer is not particularly limited, but examples thereof include a method of coating the composition for forming the protective layer containing the polyvinyl acetal resin above, and a solvent and an additive described below on the surface of the metal reflection layer described above and thereafter curing the composition by performing drying by heating and by irradiation with an ultraviolet light.

As the method of coating the composition for forming the protective layer, a well-known coating method in the related art such as a gravure coating method, a reverse coating method, a die coating method, a blade coater, a roll coater, an air knife coater, a screen coater, a bar coater, and a curtain coater can be used.

The composition for forming the protective layer may contain a solvent or various additives.

The solvent is used in the composition for forming the protective layer is not particularly limited, but examples thereof include water; an alcohol-based solvent such as methanol, ethanol, propanol, ethylene glycol, glycerin, and propylene glycol monomethyl ether; an acid such as an acetic acid; a ketone-based solvent such as acetone, methyl ethyl ketone, and cyclohexanone; an amide-based solvent such as formamide, dimethylacetamide, and N-methylpyrrolidone; a nitrile-based solvent such as acetonitrile and propionitrile; an ester-based solvent such as methyl acetate and ethyl acetate; a carbonate-based solvent such as dimethylcarbonate and diethylcarbonate; an aromatic hydrocarbon-based solvent such as benzene, toluene, and xylene; an ether-based solvent; a glycol-based solvent; an amine-based solvent; a thiol-based solvent; and a halogen-based solvent.

Among these, an amide-based solvent, a ketone-based solvent, a nitrile-based solvent, a carbonate-based solvent, and an aromatic hydrocarbon-based solvent are preferable. Specifically, acetone, dimethylacetamide, methyl ethyl ketone, methylisobutyl ketone, cyclohexanone, acetonitrile, propionitrile, N-methylpyrrolidone, dimethylcarbonate, and toluene are preferable.

In view of evenly forming a protective layer having excellent adhesion properties, the solid content concentration of the composition for forming the protective layer is preferably in the range of 1 mass% to 30 mass%.

The composition for forming the protective layer may further contain a crosslinking agent. If the crosslinking agent is contained, a crosslinking structure is formed in the protective layer so as to have advantages in that the strength is improved and adhesion properties to adjacent metal reflection layers are further improved. The crosslinking agent can be selected depending on the correlation with a resin forming a protective layer, and examples thereof include a carbodiimide compound, an isocyanate compound, an epoxy compound, an oxetane compound, a melamine compound, and a bisvinyl sulfone compound. In view of effectiveness, at least one type of crosslinking agent selected from the group consisting of a carbodiimide compound, an isocyanate compound, and an epoxy compound is preferable.

Other additives used in the composition for forming the protective layer are described in detail below.

<Other function layers>

In addition to the layer configuration described above, the film mirror and the composite film according to the invention may be provided with other function layers such as an ultraviolet absorption layer, ultraviolet light reflection layer, a gas barrier layer, an adhesive layer, support back surface protective layer, and a white layer, depending on desired use.

(Ultraviolet absorption layer)

The film mirror according to the invention preferably has an ultraviolet absorption layer between the metal reflection layer and the surface covering layer.

If the ultraviolet absorption layer is included between the metal reflection layer and the surface covering layer, deterioration of the resin material and the metal reflection layer due to ultraviolet light can be prevented.

(Ultraviolet absorber)

The ultraviolet absorber contained in the ultraviolet absorption layer is not particularly limited, and various well-known ultraviolet absorbers can be used.

In addition, in view of more suitably absorption of ultraviolet light so as to more suitably prevent deterioration of the resin material and the metal reflection layer due to ultraviolet light and in view of not deteriorating the curing at the time of forming the resin protective layer, the ultraviolet absorber contained in the ultraviolet absorption layer preferably has (absorbance in 365 nm)/(absorbance in 340 nm) of 0.5 or less and (absorbance in 400 nm)/(absorbance in 340 nm)

of 0.1 or less.

Specifically, examples of the ultraviolet absorber include an ultraviolet absorber based on benzotriazole, benzophenone, triazine, phenyl salicylate, hindered amine, and cyanoacrylate or an inorganic particle-type ultraviolet absorber such as titanium oxide. These may be used singly or two or more types thereof may be used in combination.

Specific examples of the benzophenone-based ultraviolet absorber include 2,4-dihydroxy-benzophenone, 2-hydroxy-4-methoxy-benzophenone, 2-hydroxy-4-n-octoxy-benzophenone, 2-hydroxy-4-dodecyloxy-benzophenone, 2-hydroxy-4-octadecyloxy-benzophenone, 2,2'-dihydroxy-4-methoxy-benzophenone, 2,2'-dihydroxy-4,4'-dimethoxy-benzophenone, and 2,2',4,4'-tetrahydroxy-benzophenone.

Specific examples of the benzotriazole-based ultraviolet absorber include 2-(2'-hydroxy-5-methylphenyl)benzotriazole, 2-(2'-hydroxy-3',5'-di-t-butylphenyl)benzotriazole, and 2-(2'-hydroxy-3'-t-butyl-5' -methylphenyl)benzotriazole.

Specific examples of the phenyl salicylate-based ultraviolet absorber include phenyl salicylate, and 2-4-di-t-butylphenyl-3,5-di-t-butyl-4-hydroxybenzoate.

Specific examples of the hindered amine-based ultraviolet absorber include bis(2,2,6,6-tetramethylpiperidin-4-yl) sebacate.

Specific examples of the triazine-based ultraviolet absorber include 2,4-diphenyl-6-(2-hydroxy-4-methoxyphenyl)-1,3,5-triazine, 2,4-diphenyl-6-(2-hydroxy-4-ethoxyphenyl)-1,3,5-triazine, 2,4-diphenyl-(2-hydroxy-4-propoxyphenyl)-1,3,5-triazine, 2,4-diphenyl-(2-hydroxy-4-butoxyphenyl)-1,3,5-triazine, 2,4-diphenyl-6-(2-hydroxy-4-butoxyphenyl)-1,3,5-triazine, 2,4-diphenyl-6-(2-hydroxy-4-hexyloxyphenyl)-1,3,5-triazine, 2,4-diphenyl-6-(2-hydroxy-4-octyloxyphenyl)-1,3,5-triazine, 2,4-diphenyl-6-(2-hydroxy-4-dodecyloxyphenyl)-1,3,5-triazine, and 2,4-diphenyl-6-(2-hydroxy-4-benzyloxyphenyl)-1,3,5-triazine.

The ultraviolet absorber includes a compound having a function of converting the energy held in the ultraviolet light into vibration energy in a molecule and emits the vibration energy as a heat energy or the like, in addition to the above.

<Additives>

According to the invention, the protective layer, the support (particularly, the resin support), the surface covering layer, the resin layer (the adhesive layer and the plating coating polymer layer), and the other function layers (hereinafter, these layers and the supports are collectively referred to as "function layers", simply) may contain additives such as a photopolymerization initiator, an anti-static agent, a surface regulation agent (for example, a leveling agent and a fluorine-based antifouling additive), an ultraviolet absorber, a light stabilizer, an antioxidant, a plasticiser, a radical supplementary agent, an antifoaming agent, a thickener, an anti-settling agent, a pigment, a dispersant, and a silane coupling agent, in the function layer or the composition for forming the function layer, if necessary.

(Surface regulation agent)

The surface regulation agent is a component that can be arbitrarily added to the composition for forming the function layer, in view of coating surface smoothness or antifouling properties in the function layer described above.

Examples of the material which is generally used as the surface regulation agent include a polyacrylate-based polymer such as polyalkylacrylate; a polyvinyl ether-based polymer such as polyalkylvinyl ether; a silicone-based polymer such as dimethylpolysiloxane, methylphenylpolysiloxane, and an organic modified polysiloxane to which polyether, polyester, aralkyl, and the like are introduced; a material containing a fluorine atom in these polymers. These may be used singly or two or more types thereof may be in combination.

The surface regulation agent having a fluorine atom can be obtained by copolymerizing a monomer having a fluorine-containing group. Particularly, it is possible to provide antifouling properties to the film (layer) including the fluorine-based surface regulation agent by reducing surface energy of the film surface so as to obtain water and oil repelling surface.

Examples of specific products include SURFLON "S-381", "S-382", "SC-101", "SC-102", "SC-103", and "SC-104" (all manufactured by AGC Seimi Chemical Co., Ltd.), FLUORAD "FC-430", "FC-431", "FC-173" (all manufactured by Fluorochemicals-Sumitomo 3M Ltd.), EFTOP "EF352", "EF301", and "EF303" (all manufactured by Shin Akita Chemicals Corp.), Schwego Fluor "8035" and "8036" (all manufactured by Schwegmann), "BM1000" and "BM1100" (all manufactured by BM), MEGAFACE "F-171", "F-470", "F-780-F", "RS-75", and "RS-72-K" (all manufactured by DIC Corporation), BYK340 (manufactured by BYK Chemie Japan), and "ZX-049", "ZX-001", and "ZX-017" (all manufactured by Fuji Kasei Kogyo Co. Ltd.).

In addition, as described above, it is preferable that the fluorine-based surface regulation agent is not added to the surface covering layer.

(Ultraviolet absorber)

The ultraviolet absorber is not particularly limited, and various types of the ultraviolet absorbers described above can be used.

(Light stabilizer)

In view of preventing oxidation deterioration due to light (mainly an ultraviolet light), the light stabilizer is a component that can be arbitrarily added to the composition for forming the function layer.

As the light stabilizer, a hindered amine-based light stabilizer, a benzoate-based light stabilizer, and the like are preferable. Among these, a hindered amine light stabilizer (HALS) is preferable. The light stabilizer may be used singly or two or more types thereof may be in combination.

Examples of the commercially obtainable hindered amine light stabilizer include "TINUVIN 622" (manufactured by Ciba Japan Ltd.) as a light stabilizer, which is a polymer of dimethyl succinate and 4-hydroxy-2,2,6,6-tetramethyl-1-piperidine ethanol; "TINUVIN 119" (manufactured by Ciba Japan Ltd.) as a light stabilizer which is a 1:1 reaction product between a polymer of dimethyl succinate and 4-hydroxy-2,2,6,6-tetramethyl-1-piperidine ethanol and N,N',N",N"'-tetrakis-(4,6-bis-(butyl-(N-methyl-2,2,6,6-tetramethylpiperidin-4-yl)amino)-tria zin-2-yl)-4,7-diazadecane-1,10-diamine; "TINUVIN 2020" (manufactured by Ciba Japan Ltd.) as a light stabilizer which is a polycondensation product of dibutylamine-1,3-triazine-N, N'-bis(2,2,6,6-tetramethyl-4-piperidyl-1,6-hexamethylenediamine and N-(2,2,6,6-tetramethyl-4-piperidyl)butylamine; "TINUVIN 944" (manufactured by Ciba Japan Ltd.) as a light stabilizer which is poly[{6-(1,1,3,3-tetramethylbutyl)amino-1,3,5-triazine-2,4-diyl} {(2,2,6,6-tetramethyl-4-piperi dyl)imino}hexamethylene{(2,2,6,6-tetramethyl-4-piperidyl)imino}]; "TINUVIN 765" (manufactured by Ciba Japan Ltd.) which is a light stabilizer which is a mixture of bis(1,2,2,6,6-pentamethyl-4-piperidyl) sebacate and methyl-1,2,2,6,6-pentamethyl-4-piperidyl sebacate; "TINUVIN 770" (manufactured by Ciba Japan Ltd.) as a light stabilizer which is bis(2,2,6,6-tetramethyl-4-piperidyl) sebacate; "TINUVIN 123" (manufactured by Ciba Japan Ltd.) as a light stabilizer which is a reaction product between decanedioic acid bis(2,2,6,6-tetramethyl-1-(octyloxy)-4-piperidinyl) ester (1,1-dimethyl ethyl hydroperoxide) and octane; "TINUVIN 144" (manufactured by Ciba Japan Ltd.) as a light stabilizer which is bis(1,2,2,6,6-pentamethyl-4-piperidyl)[[3,5-bis(1,1-dimethyl ethyl)-4-hydroxyphenyl]methyl]butylmalonate; "TINUVIN 152" (manufactured by Ciba Japan Ltd.) as a light stabilizer which is a reaction product of a reaction product of cyclohexane and peroxide N-butyl-2,2,6,6-tetramethyl-4-piperidine amine-2,4,6-trichloro-1,3,5-triazine and 2-amino ethanol; and "TINUVIN 292" (manufactured by Ciba Japan Ltd.) as a light stabilizer which is a mixture of bis(1,2,2,6, 6-pentamethyl-4-piperidyl) sebacate and methyl-1,2,2,6,6-pentamethyl-4-piperidyl sebacate.

(Antioxidant)

Examples of the antioxidant include include a phenol-based antioxidant, a thiol-based antioxidant, and a phosphite-based antioxidant.

Specific examples of the phenol-based antioxidant include 1,1,3-tris(2-methyl-4-hydroxy-5-t-butylphenyl) butane, 2,2'-methylene bis(4-ethyl-6-t-butylphenol), tetrakis-[methylene-3-(3',5'-di-t-butyl-4'-hydroxyphenyl)propionate]methane, 2,6-di-t-butyl-p-cresol, 4,4'-thiobis(3-methyl-6-t-butylphenol), 4,4'-butylidene bis(3-methyl-6-t-butylphenol), 1,3,5-tris(3',5'-di-t-butyl-4'-hydroxybenzyl)-S-triazine-2,4,6-(1H,3H,5H)trione, stearyl-β-(3,5-di-t-butyl-4-hydroxyphenyl)propionate, triethylene glycol bis[3-(3-t-butyl-5-methyl-4-hydroxyphenyl)propionate, 3,9-bis[1,1-di-methyl-2-[β-(3-t-butyl-4-hydroxy-5-methylphenyl)propionyloxy]ethyl]-2,4,8,10 -tetraoxaspiro[5,5]undecane, and 1,3,5-trimethyl-2,4,6-tris(3,5-di-t-butyl-4-hydroxybenzyl)benzene. Particularly, the phenol-based antioxidant preferably has a molecular weight of 550 or greater.

Specific examples of the thiol-based antioxidant include distearyl-3,3'-thiodipropionate and pentaerythritol-tetrakis-(β-lauryl-thiopropionate). Examples of the phosphite-based antioxidant include tris(2,4-di-t-butylphenyl) phosphite, distearylpentaerythritol diphosphite, di(2,6-di-t-butylphenyl)pentaerythritol diphosphite, bis-(2,6-di-t-butyl-4-methylphenyl)-pentaerythritol diphosphite, tetrakis(2,4-di-t-butylphenyl)-4,4'-biphenylene diphosphonite, and 2,2'-methylene bis(4,6-di-t-butylphenyl)octyl phosphite.

<Use of film mirror>

The film mirror according to the invention can be suitably used for concentrating solar light. Examples of the application aspect thereof include an application to a solar light reflection plate. A mirror surface by a film mirror can be created by fixing the film mirror according to the invention to a substrate or a frame body made of any one of resin, metal, or ceramic such that a solar light reflection plate can be created. It is preferable to effectively concentrate solar light by disposing plural mirror units created in this manner. More effective solar light concentration can be realized by including

a solar light tracking system that causes the mirror units to track a diurnal motion of the sun.

In addition, the film mirror according to the invention may be used as a mirror for lighting. Since the film mirror according to the invention has flexibility, followability to a surface having curvature is good, and thus the film mirror according to the invention is preferably provided on such a surface.

<Use of composite film>

The composite film according to the invention can be used as a film for protection from the exposure to the outdoor environment, such as a protection film for an automobile body or automobile glass, a protection film for a solar cell, and a protection film for an optical film. In addition, the composite film according to the invention can be used as a film to be exposed to the outdoor environment, such as a film for a greenhouse.

Examples

Hereinafter, the invention is described in detail with reference to examples. However, the invention is not limited thereto.

<Example 1>

[Manufacturing of film mirror]

A film mirror for solar light reflection was manufactured by providing a silver-containing metal reflection layer on a support by electroplating in a step described below, forming an ultraviolet absorption layer on the metal reflection layer, and further providing the surface covering layer on the ultraviolet absorption layer.

(Manufacturing of PET film on which a silver reflection layer is formed)

A surfactant (F-780-F, solid content: 30%, manufactured by DIC Corporation) (0.16 parts by weight) and a photopolymerization initiator (ESACURE KTO-46, manufactured by Lamberti S.p.A.) (0.35 parts by mass) were added to a mixture solution of an acryl polymer 1 (22.02 parts by mass) having the following structure, 1-methoxy-2-propanol (72.73 parts by mass), and cyclohexanone (4.74 parts by mass), and stirring was performed such that an coating liquid for forming a plating coating polymer layer was prepared.

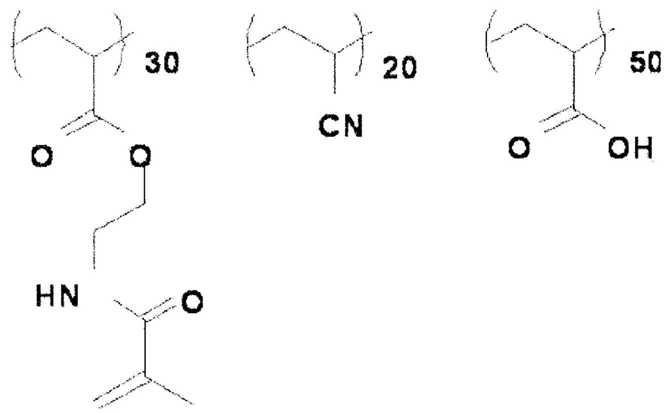

Acryl polymer 1

Subsequently, the prepared coating liquid for forming the plating coating polymer layer was applied to a PET film (A4300, manufactured by Toyobo Co., Ltd.) by a bar coating method, was dried at 25°C for 5 minutes, and was subsequently dried at 80°C for 5 minutes, so as to obtain a coated film.

The coated film was irradiated in the integrated exposure amount of 600 $mJ/cm^2$ at the wavelength of 254 nm by using an UV exposure machine (Model number: UVF-502S, Lamp: UXM-501MD) manufactured by SAN-EI Electric Co., Ltd., so as to form a plating coating polymer layer (thickness: 0.55 $\mu m$).

Thereafter, the PET film with the plating coating polymer layer was immersed for 5 minutes in a 1-wt% sodium hydrogen carbonate aqueous solution, and an unreacted polymer was removed from the plating coating polymer layer.

Subsequently, the PET film with the plating coating polymer layer was washed with pure water and further air-dried.

(Forming of metal reflection layer)

Subsequently, the PET film with the plating coating polymer layer was immersed for 5 minutes in a 1-wt% silver nitrate aqueous solution, washed with pure water, and air-dried, so as to obtain the PET film with the plating coating polymer layer to which a silver ion was applied.
The PET film with the plating coating polymer layer to which the silver ion was applied was immersed in an alkaline aqueous solution including 0.14 wt% of NaOH and 0.25 wt% of formalin for 1 minute, washed with pure water, and air-dried, such that a restored silver layer (film thickness of about 20 nm) was formed near the plating coating polymer layer surface and a PET film with a restored silver layer was obtained.
Thereafter, an electroplating treatment described below was performed on the PET film with the restored silver layer, and a PET film with a silver layer in which the silver layer having a thickness of 50 nm is provided on the restored silver layer.
DAIN SILVER BRIGHT PL50 (manufactured by Daiwa Fine Chemicals Co., Ltd.) used as an electroplating solution was adjusted to pH 7.8 by 8 M potassium hydroxide. The PET film with the restored silver layer was immersed in the electroplating solution, was plated for 15 seconds at 0.33 $A/dm^2$, thereafter washed with flowing pure water for 1 minute, and air-dried.
The obtained PET film with the silver layer was immersed for 60 seconds in a thiourea aqueous solution (thiourea: 100 ppm by mass), and the surface of the silver layer was treated. After the surface treatment, the surface of the silver layer was washed with pure water and air-dried.
Subsequently, an electroplating treatment described below was performed on the silver layer after the surface treatment, and the silver layer having a thickness of 75 nm was further formed on the silver layer after the surface treatment, so as to obtain a silver reflection layer.
DAIN SILVER BRIGHT PL50 (manufactured by Daiwa Fine Chemicals Co., Ltd.) used as the electroplating solution was adjusted to pH 7.8 by 8 M potassium hydroxide. The PET film with the silver layer after the surface treatment was immersed in a silver electroplating solution, was plated for 15 seconds at 0.5 $A/dm^2$, washed with flowing water for 1 minute and air-dried.
Further, in order to remove an oxide film, the PET film with the silver layer was immersed in a 10 mass% aqueous solution (methanesulfonic acid: 6 mass%) of DAIN Silver ACC (manufactured by Daiwa Fine Chemicals Co., Ltd.) for 90 seconds, as a treatment after electroplating. Thereafter, the PET film with the silver layer was washed with flowing water for 1 minute and air-dried.
In this manner, the PET film on which silver reflection layer (silver-containing metal reflection layer) was formed was obtained. The arithmetic average roughness Ra of the surface of the formed silver layer was measured by using an atomic force microscope (AFM) and was 3.4 nm.

[Forming of ultraviolet absorption layer]

(Preparation of ultraviolet absorption layer coating liquid UV-1)

As an ultraviolet absorption layer coating liquid UV-1, a mixture solution of a resin binder (S-LEC BL-1, manufactured by Sekisui Chemical Co., Ltd.) (14.48 mass%), an ultraviolet absorber (TINUVIN405, manufactured by BASF SE) (1.45 mass%), an antioxidant (IRGANOX 1076, manufactured by BASF SE) (0.03 mass%), a fluorine-based surfactant (MEGAFACE F-780-F, manufactured by DIC Corporation, solid content: 30%) (0.14 mass%), methyl ethyl ketone (58.90 mass%), propylene glycol monomethyl ether (20.00 mass%), and cyclohexanone (5.00 mass%) was prepared.
Here, TINUVIN 405 which is an ultraviolet absorber has (absorbance at 365 nm)/(absorbance at 340 nm) of 0.2 and (absorbance at 400 nm)/(absorbance at 340 nm) of 0.0.

(Forming of ultraviolet absorption layer)

The obtained ultraviolet absorption layer coating liquid UV-1 was applied on the silver-containing metal reflection layer such that a film thickness after drying became 10 μm with a bar coat method, and was dried at 130°C for 2 minutes, so as to form an ultraviolet absorption layer.

[Forming of surface covering layer]

(Preparing of surface covering layer coating liquid TC-1)

As a surface covering layer coating liquid TC-1, a mixture solution of a resin material (PANDEX GW3250 (urethane acrylate), manufactured by DIC Corporation, solid content: 90%) (43.26 mass%), a hydrophilizing agent (PANDEX EXP. HXLV-05, manufactured by DIC Corporation) (2.12 mass%), a polymerization initiator (IRGACURE 127, manufactured by BASF SE) (0.85 mass%), a polymerization initiator (IRGACURE 907, manufactured by BASF SE) (0.42 mass%), a non-fluorine-based surfactant (NEWCOL 2302, manufactured by Nippon Nyukazai Co., Ltd.) (0.01 mass%), methylisobutyl ketone (48.34 mass%), and cyclohexanone (5.00 mass%) was prepared.

(Forming of surface covering layer)

The obtained surface covering layer coating liquid TC-1 was applied on the ultraviolet absorption layer by a bar coating method, such that the film thickness after drying became 15 μm, dried at 130°C for 2 minutes, and a surface covering layer was formed by performing ultraviolet exposure with an ultraviolet ray of 100 mJ/cm$^2$ at a wavelength of 254 nm, using an UV exposure machine (Model number: UVF-502S, Lamp: UXM-501MD) manufactured by SAN-EI Electric Co., Ltd., so as to manufacture a film mirror.

<Example 2>

A film mirror was manufactured in the same manner as Example 1 except that a surface covering layer coating liquid TC-2 was used instead of the surface covering layer coating liquid TC-1.

(Preparing of surface covering layer coating liquid TC-2)

The same method was performed as in the surface covering layer coating liquid TC-1 except that polymerizable polyrotaxane A was used as the resin material. That is, as the surface covering layer coating liquid TC-2, a mixture solution of a resin material (polymerizable polyrotaxane A) (43.26 mass%), a hydrophilizing agent (PANDEX EXP. HXLV-05, manufactured by DIC Corporation) (2.12 mass%), a polymerization initiator (IRGACURE 127, manufactured by BASF SE) (0.85 mass%), a polymerization initiator (IRGACURE 907, manufactured by BASF SE) (0.42 mass%), a non-fluorine-based surfactant (NEWCOL 2302, manufactured by Nippon Nyukazai Co., Ltd.) (0.01 mass%), methylisobutyl ketone (48.34 mass%), and cyclohexanone (5.00 mass%) was prepared.

(Polymerizable polyrotaxane A)

4 g of polyethylene glycol (average molecular weight: 20,000) and 20 ml of dry methylene chloride was put into a 100-ml Erlenmeyer flask and polyethylene glycol was dissolved. This solution was put under argon atmosphere, 0.8 g of 1,1'-carbonyl diimidazole was added and was subsequently stirred at room temperature (20°C) for 6 hours in argon atmosphere, such that a reaction was performed.

The reactant obtained above was poured to 300 ml of diethyl ether stirred at a high speed. After the reactant was stood still for 10 minutes, the liquid having deposit was centrifuged for 5 minutes at 10,000 rpm. The deposit was extracted and dried in vacuum at 40°C for 3 hours.

The obtained product was dissolved in 20 ml of methylene chloride. This liquid was dripped to 10 ml of ethylenediamine over 3 hours and stirred for 40 minutes after dripping. The obtained reactant was applied to a rotary evaporator, methylene chloride was removed, was thereafter dissolved in 50 ml of water, was put into a dialysis tube (fraction molecular weight: 8,000), and was dialyzed in water for 3 days. The obtained dialyzate was dried in a rotary evaporator, and this dried product was dissolved in 20 ml of methylene chloride and was redeposited in 180 ml of diethyl ether. The liquid having the deposit was centrifuged for 5 minutes at 100,000 rpm and dried in vacuum at 40°C for 2 hours, so as to obtain 2.83 g of polyethylene glycol bisamine (number average molecular weight: 20,000).

4.5 g of polyethylene glycol bisamine above and 18.0 g of α-cyclodextrin were added to 150 mL of water, heated to 80°C, and dissolved. The solution was cooled and stood still at 5°C for 16 hours. The obtained white paste-state deposit was collected and dried.

The dried product was added to a mixture solution of 12.0 g of 2,4-dinitrofluorobenzene and 50 g of dimethylformamide and stirred at room temperature for 5 hours. 200 mL of dimethylsulfoxide (DMSO) was added to the reaction mixture, dissolved, and poured to 3750 mL of water, so as to collect a deposit. The deposit was redissolved in 250 mL of DMSO and was poured to 3500 mL of a 0.1% saline solution, so as to collect a deposit. This deposit was washed 3 times respectively with water and methanol and dried in vacuum at 50°C for 12 hours, so as to obtain 2.0 g of polyrotaxane

in which polyethylene glycol bisamine was enclosed with α-cyclodextrin in a skewer shape, and 2,4-dinitrophenyl groups are bond to amino groups at both ends. The obtained polyrotaxane was made to be polyrotaxane a1.

With respect to the obtained polyrotaxane a1, ultraviolet light absorption measurement and $^1$H-NMR measurement were performed, an inclusion amount of α-cyclodextrin was calculated, and the inclusion amount was 72 units.

Specifically, in the ultraviolet light absorption measurement, respective molar absorption coefficients of the synthesized inclusion compound and 2,4-dinitroaniline in 360 nm were measured, and the inclusion amount of cyclodextrin was calculated. In addition, in the $^1$H-NMR measurement, the inclusion amount was calculated from an integral ratio of the hydrogen atom of the polyethylene glycol portion and the hydrogen atom of the cyclodextrin portion.

The polyrotaxane a1 (1 g) was dissolved in 50 g of a 8% solution of lithium chloride/N,N-dimethylacetamide. Here, 6.7 g of acetic anhydride, 5.2 g of pyridine, and 100 mg of N,N-dimethylaminopyridine were added and stirred at room temperature for one night. The reaction solution was poured to methanol, and a deposited solid was separated by centrifugation. The separated solid was dried, and dissolved in acetone. The solution was poured to water and the deposited solid was separated by centrifugation and dried, so as to obtain polyrotaxane (1.2 g) in which a portion of a hydroxy group of cyclodextrin was modified with an acetyl group. The obtained polyrotaxane was polyrotaxane a2.

The $^1$H-NMR measurement of polyrotaxane a2 was performed, and the introduction amount (modification degree) of the acetyl group was calculated and was 75%.

The polyrotaxane a2 (1 g) was dissolved in 50 g of the 8% solution of lithium chloride/N,N-dimethylacetamide. And 5.9 g of acrylic acid chloride, 5.2 g of pyridine, and 100 mg of N,N-dimethylaminopyridine were add and stirred at room temperature for two nights. The reaction solution was poured to methanol, and the deposited solid was separated by centrifugation. The separated solid was dried and dissolved in acetone. The solution was poured into water, the deposited solid was separated by centrifugation and dried, so as to obtain polyrotaxane (0.8 g) in which the hydroxy group of cyclodextrin was modified with an acryloyl group and an acetyl group. The obtained polyrotaxane is polymerizable (crosslinking) polyrotaxane A.

The $^1$H-NMR measurement of the polymerizable polyrotaxane A was performed and the introduction amount (modification degree) of the acryloyl group and the acetyl group was calculated and was 87%. That is, the introduction amount (modification degree) of the acryloyl group was 12%.

<Example 3>

A film mirror was manufactured in the same manner as in Example 1, except that a surface covering layer coating liquid TC-3 was used instead of the surface covering layer coating liquid TC-1.

(Preparing of surface covering layer coating liquid TC-3)

The same method was performed as in the surface covering layer coating liquid TC-1, except that one type of a polymerization initiator was used. That is, as the surface covering layer coating liquid TC-3, a mixture solution of a resin material (PANDEX GW3250, manufactured by DIC Corporation, solid content: 90%) (43.26 mass%), a hydrophilizing agent (PANDEX EXP. HXLV-05, manufactured by DIC Corporation) (2.12 mass%), a polymerization initiator (IRGACURE 127, manufactured by BASF SE) (1.27 mass%), a non-fluorine-based surfactant (NEWCOL 2302, manufactured by Nippon Nyukazai Co., Ltd.) (0.01 mass%), methylisobutyl ketone (48.34 mass%), and cyclohexanone (5.00 mass%) was prepared.

<Example 4>

A film mirror was manufactured in the same manner as in Example 3 except that the ultraviolet absorption layer coating liquid UV-2 was used instead of the ultraviolet absorption layer coating liquid UV-1.

(Preparing of ultraviolet absorption layer coating liquid UV-2)

The same method was performed as in the ultraviolet absorption layer coating liquid UV-1, except that TINUVIN 460 (manufactured by BASF SE) was used as the ultraviolet absorber. That is, as the ultraviolet absorption layer coating liquid UV-2, a mixture solution of a resin binder (S-LEC BL-1, manufactured by Sekisui Chemical Co., Ltd.) (14.48 mass%), an ultraviolet absorber (TINUVIN 460, manufactured by BASF SE) (1.45 mass%), antioxidant (IRGANOX 1076, manufactured by BASF SE) (0.03 mass%), a fluorine-based surfactant (MEGAFACE F-780-F, manufactured by DIC Corporation, solid content: 30%) (0.14 mass%), methyl ethyl ketone (58.90 mass%), propylene glycol monomethyl ether (20.00 mass%), and cyclohexanone (5.00 mass%) was prepared.

Here, TINUVIN 460 which is an ultraviolet absorber has (absorbance at 365 nm)/(absorbance at 340 nm) of 0.7 and (absorbance at 400 nm)/(absorbance at 340 nm) of 0.0.

<Example 5>

A film mirror was manufactured in the same manner in Example 3 except that the ultraviolet absorption layer was not included. That is, the surface covering layer was formed on the metal reflection layer, and the film mirror was manufactured.

<Example 6>

A film mirror was manufactured in the same manner in Example 5 except that a surface covering layer was formed by using a surface covering layer coating liquid TC-4 described below instead of the surface covering layer coating liquid TC-3, coating the surface covering layer coating liquid TC-4 by a bar coating method such that the film thickness after drying was 15 μm, and drying and curing the surface covering layer coating liquid TC-4 at 130°C for 20 minutes.

(Preparing of surface covering layer coating liquid TC-4)

The same method was performed as in the surface covering layer coating liquid TC-3, except that V-60 (AIBN) (manufactured by Wako Pure Chemical Industries, Ltd.) was used as the polymerization initiator. That is, as the surface covering layer coating liquid TC-3, a mixture solution of a resin material (PANDEX GW3250, manufactured by DIC Corporation, solid content: 90%) (43.26 mass%), a hydrophilizing agent (PANDEX EXP. HXLV-05, manufactured by DIC Corporation) (2.12 mass%), a polymerization initiator (V-80(AIBN), manufactured by Wako Pure Chemical Industries, Ltd.) (1.27 mass%), a non-fluorine-based surfactant (NEWCOL 2302, manufactured by Nippon Nyukazai Co., Ltd.) (0.01 mass%), methylisobutyl ketone (48.34 mass%), and cyclohexanone (5.00 mass%) was prepared.

<Example 7>

A film mirror was manufactured in the same manner as in Example 1 except that a surface covering layer coating liquid TC-5 was used instead of the surface covering layer coating liquid TC-1.

(Preparing of surface covering layer coating liquid TC-5)

The same method was performed as in the surface covering layer coating liquid TC-1, except that ELEC ME-20 (manufactured by Kao Corporation) was used as the hydrophilizing agent. That is, as the surface covering layer coating liquid TC-5, a mixture solution of a resin material (PANDEX GW3250, manufactured by DIC Corporation, solid content: 90%) (43.26 mass%), a hydrophilizing agent (ELEC ME-20, manufactured by Kao Corporation) (2.12 mass%), a polymerization initiator (IRGACURE 127, manufactured by BASF SE) (0.85 mass%), a polymerization initiator (IRGACURE 907, manufactured by BASF SE) (0.42 mass%), a non-fluorine-based surfactant (NEWCOL 2302, manufactured by Nippon Nyukazai Co., Ltd.) (0.01 mass%), methyl isobutyl ketone (48.34 mass%), and cyclohexanone (5.00 mass%) was prepared.

<Example 8>

A film mirror was manufactured in the same manner as in Example 1 except that a surface covering layer coating liquid TC-6 described below was used instead of the surface covering layer coating liquid TC-1.

(Preparing of surface covering layer coating liquid TC-6)

As the surface covering layer coating liquid TC-6, a mixture solution of a resin material (PANDEX EXP.DX-40 (urethane acrylate), manufactured by DIC Corporation, solid content: 90%) (43.26 mass%), a hydrophilizing agent (PANDEX EXP. HXLV-05, manufactured by DIC Corporation) (2.12 mass%), a polymerization initiator (IRGACURE 127, manufactured by BASF SE) (0.85 mass%), a polymerization initiator (IRGACURE 907, manufactured by BASF SE) (0.42 mass%), a non-fluorine-based surfactant (NEWCOL 2302, manufactured by Nippon Nyukazai Co., Ltd.) (0.01 mass%), methylisobutyl ketone (48.34 mass%), and cyclohexanone (5.00 mass%) was prepared.

<Example 9>

A film mirror was manufactured in the same manner as in Example 1 except that a surface covering layer coating liquid TC-7 was used instead of the surface covering layer coating liquid TC-1.

(Preparing of surface covering layer coating liquid TC-7)

The same method was performed as in the surface covering layer coating liquid TC-1, except that a fluorine-based surfactant was used as the surfactant. That is, as the surface covering layer coating liquid TC-7, a mixture solution of a resin material (PANDEX EXP.DX-40, manufactured by DIC Corporation, solid content: 90%) (43.04 mass%), a hydrophilizing agent (PANDEX EXP. HXLV-05, manufactured by DIC Corporation) (2.12 mass%), a polymerization initiator (IRGACURE 127, manufactured by BASF SE) (0.85 mass%), a polymerization initiator (IRGACURE 907, manufactured by BASF SE) (0.42 mass%), a fluorine-based surfactant (MEGAFACE RS75, manufactured by DIC Corporation, solid content: 40%) (0.53 mass%), NEWCOL 2302, manufactured by Nippon Nyukazai Co., Ltd.) (0.01 mass%), methylisobutyl ketone (48.34 mass%), and cyclohexanone (5.00 mass%) was prepared.

<Comparative Example 1>

A film mirror was manufactured in the same manner as in Example 5 except that a surface covering layer coating liquid TC-8 was used instead of the surface covering layer coating liquid TC-3 so as to make the surface covering layer to become a hard coat layer without self-recovering properties.

(Preparing of surface covering layer coating liquid TC-8)

As the surface covering layer coating liquid TC-8, a mixture solution of a resin material (KAYARAD DPHA, manufactured by Nippon Kayaku Co.,Ltd.) (43.26 mass%), a hydrophilizing agent (PANDEX EXP. HXLV-05, manufactured by DIC Corporation) (2.12 mass%), a polymerization initiator (IRGACURE 127, manufactured by BASF SE) (1.27 mass%), a non-fluorine-based surfactant (NEWCOL 2302, manufactured by Nippon Nyukazai Co., Ltd.) (0.01 mass%), methylisobutyl ketone (48.34 mass%), and cyclohexanone (5.00 mass%) was prepared.

<Comparative Example 2>

A film mirror was manufactured in the same manner as in Example 5 except that a surface covering layer coating liquid TC-9 was used instead of the surface covering layer coating liquid TC-3 so as to make the surface covering layer to become a hard coat layer without self-recovering properties and to have a configuration without hydrophilicity.

(Preparing of surface covering layer coating liquid TC-9)

As the surface covering layer coating liquid TC-9, a mixture solution for a resin material (KAYARAD DPHA, manufactured by Nippon Kayaku Co.,Ltd.) (45.38 mass%), a polymerization initiator (IRGACURE 127, manufactured by BASF SE) (1.27 mass%), a non-fluorine-based surfactant (NEWCOL 2302, manufactured by Nippon Nyukazai Co., Ltd.) (0.01 mass%), methylisobutyl ketone (48.34 mass%), and cyclohexanone (5.00 mass%) was prepared.

<Comparative Example 3>

A film mirror was manufactured in the same manner as in Example 1 except that a surface covering layer coating liquid TC-10 was used instead of the surface covering layer coating liquid TC-1 so as to make the surface covering layer to have a configuration without hydrophilicity.

(Preparing of surface covering layer coating liquid TC-10)

As the surface covering layer coating liquid TC-10, a mixture solution of a resin material (PANDEX GW3250, manufactured by DIC Corporation, solid content: 90%) (45.38 mass%), a polymerization initiator (IRGACURE 127, manufactured by BASF SE) (0.85 mass%), a polymerization initiator (IRGACURE 907, manufactured by BASF SE) (0.42 mass%), a non-fluorine-based surfactant (NEWCOL 2302, manufactured by Nippon Nyukazai Co., Ltd.) (0.01 mass%), methylisobutyl ketone (48.34 mass%), and cyclohexanone (5.00 mass%) was prepared.

<Example 10>

[Manufacturing of composite film]

A surface covering layer is provided on a support, so as to manufacture a composite film.

[Forming of surface covering layer]

A polyethylene terephthalate (PET) film (manufactured by Toyobo Co., Ltd., COSMOSHINE A-4300, thickness: 250 μm) was used as the support. The surface covering layer coating liquid TC-3 was applied on one surface of the support by a bar coating method such that the film thickness after drying became 10 μm, drying was performed at 130°C for 2 minutes, ultraviolet exposure was performed with an ultraviolet light of 500 mJ/cm$^2$ at the wavelength of 254 nm by an UV exposure machine (manufactured by SAN-EI Electric Co., Ltd.: UVF-502S, lamp: UXM-501MD), a surface covering layer was formed, and a composite film was manufactured.

Formulae of respective film mirrors and respective composite films are shown in Table 1.

[Table 1]

| | Support | Reflection layer | Ultraviolet absorption layer | | Surface covering layer | | | |
|---|---|---|---|---|---|---|---|---|
| | | | Resin binder | UV absorber | Resin Material | Polymerization initiator | Surfactant | Hydrophilizing agent |
| Example 1 | PET | Silver Plating | S-LEC BL-1 (PVB) | TINUVIN 405 | PANDEX GW3250 | IRGACURE 127+ IRGACURE 907 | NEWCOL 2302 | PANDEX EXP. HXLV05 |
| Example 2 | PET | Silver Plating | S-LEC BL-1 (PVB) | TINUVIN 405 | Polymerizable polyrotaxane | (IRGACURE 127 + IRGACURE 907 | NEWCOL 2302 | PANDEX EXP. HXLV05 |
| Example 3 | PET | Silver Plating | S-LEC BL-1 (PVB) | TINUVIN 405 | PANDEX GW3250 | IRGACURE 127 | NEWCOL 2302 | PANDEX EXP. HXLV05 |
| Example 4 | PET | Silver Plating | S-LEC BL-1 (PVB) | TINUVIN 460 | PANDEX GW3250 | IRGACURE 127 | NEWCOL 2302 | PANDEX EXP. HXLV05 |
| Example 5 | PET | Silver Plating | None | None | PANDEX GW3250 | IRGACURE 127 | NEWCOL 2302 | PANDEX EXP. HXLV05 |
| Example 6 | PET | Silver Plating | None | None | PANDEX GW3250 | AIBN | NEWCOL 2302 | PANDEX EXP. HXLV05 |
| Example 7 | PET | Silver Planting | S-LEC BL-1 (PVB) | TINUVIN 405 | PANDEX GW3250 | (IRGACURE 127 + IRGACURE 907 | NEWCOL 2302 | ELEC ME-20 |
| Example 8 | PET | Silver Plating | S-LEC BL-1 (PVB) | TINUVIN 405 | PANDEX EXP.DX-40 | IRGACURE 127 + IRGACURE 907 | NEWCOL 2302 | PANDEX EXP. HXLV05 |
| Example 9 | PET | Silver Plating | S-LEC BL-1 (PVB) | TINUVIN 405 | PANDEX GW3250 | IRGACURE 127 + IRGACURE 907 | MEGAFACE RS75 | PANDEX EXP. HXLV05 |
| Example 10 | PET | No Plating | None | None | PANDEX GW3250 | (IRGACURE 127 | NEWCOL 2302 | PANDEX EXP. HXLV05 |
| Comparative Example 1 | PET | Silver Plating | None | None | DPHA | IRGACURE 127 | NEWCOL 2302 | PANDEX EXP. HXLV05 |
| Comparative Example 2 | PET | Silver Plating | None | None | DPHA | IRGACURE 127 | NEWCOL 2302 | None |
| Comparative Example 3 | PET | Silver Plating | S-LEC BL-1 (PVB) | TINUVIN 405 | PANDEX GW3250 | IRGACURE 127 + IRGACURE 907 | NEWCOL 2302 | None |

[Performance evaluation]

With respect to each of the manufactured film mirrors and the manufactured composite films, an elastic recovery rate, surface hardness, and a water contact angle of the surface covering layer were measured.
In addition, with respect to each of the manufactured film mirrors and the manufactured composite films, durability, scratch resistance, dust adhesion resistance, cleaning properties, and reflectivity were evaluated in the methods below.

<Surface hardness-elastic recovery rate>

The surface hardness of the surface covering layer (Martens hardness) was measured by using a micro hardness meter (DUH-201 S, manufactured by Shimadzu Corporation).
In addition, at room temperature, under the load of 1 mN, and in the condition of 10 seconds, a maximum indentation depth (hmax) of an indenter indented into a test specimen and an indentation depth (hf) after the load was removed (after 10 seconds) are measured, an elastic recovery amount (hmax-hf) was calculated as a difference of these values, and an elastic recovery rate was calculated from (hmax-hf)/hmax.
In addition, the surface in the surface hardness and the elastic recovery rate refers to a portion of a measurement depth (about 10 nm).

<Water contact angle>

A water contact angle was measured by dripping 0.6 μL of pure water on the surface of the surface covering layer by using a contact angel meter (DM-500, manufactured by Kyowa Interface Science Co., Ltd.).

<Reflectivity>

With respect to each of the film mirrors, reflectivity of in the range of the wavelength of 280 nm to the wavelength of 1,700 nm was measured at an interval of 1 nm by using an ultraviolet-visible near infrared spectrophotometer UV-3100 (manufactured by Shimadzu Corporation), a spectrum of obtained reflectivity was indicated as Rs (λ) (λ:wavelength). A standard Spectral Irradiance Si of the solar light on the ground surface (air mass: 1.5) is defined by ASTMG 173-03, and, when Si at an interval of 1 nm from the wavelength of 280 nm to the wavelength of 1,700 nm was indicated as Si (λ), solar light energy reflectivity (Rtotal) was defined from an expression below and calculated.

$$Rtotal = \frac{\sum_{\lambda=280nm}^{1700nm} \{Si(\lambda) \times Rs(\lambda)\}}{\sum_{\lambda=280nm}^{1700nm} Si(\lambda)}$$

In addition, Rtotal means reflection efficiency of the effective solar light energy to which irradiation intensity at the respective wavelengths of the solar light was taken into account.

<Durability>

Each of the film mirrors was arranged in a xenon lamp light resistance testing machine (manufactured by ATLAS Material Testing Technology, Ci5000, power: 180 W, Black Panel Temperature: 83°C) and was left for 6,000 hours in the conditions of a temperature of 55°C and humidity of 50%RH, a solar light energy reflectivity Rtotal of the film mirror was measured, and a decrease of the reflectivity of the film mirror (ΔRtotal = Rtotal (%) before being left - Rtotal (%) after being left) was evaluated. In addition, the reflectivity was measured by the same method as above by using an

ultraviolet-visible near infrared spectrophotometer UV-3100 (manufactured by Shimadzu Corporation) in the same evaluation method as above and was evaluated in the evaluation criteria below. In practice, ΔRtotal had an acceptable range of A to B.

(Evaluation criteria)

A: A decrease of reflectivity was less than 1%.
B: A decrease of reflectivity was 1% or greater and less than 3%.
C: A decrease of reflectivity was 3% or greater.

<Scratch resistance·Dust adhesion resistance·Cleaning properties>

A dust test was performed in conformity with "Method for sand-falling wear resistance test" disclosed in JIS H 8503 (1989).

Specifically, each of the manufactured film mirrors and the manufactured composite films of the examples and the comparative examples was cut into a 3-cm square (Step T0), the manufactured film mirror and the manufactured composite film was fixed to a Gardner-type sand-falling wear resistance tester (SD-1, manufactured by Suga Test Instruments Co.,Ltd.) such that $SiO_2$ particles collided at an angle of 45°, 320 g of the SiO2 particles (particle diameter: 150 μm) were freely fallen from height of 100 cm to be collided (referred to as Step T1). Thereafter, washing with high pressure water was performed on a sample (referred to as Step T2), and subsequently adhered particles were completely removed by ultrasonic wave washing in pure water (referred to as Step T3). In each step at this point, Y(SCE)/Y(SCI) (hereinafter, referred to as "H") was measured.

The difference ΔH of H(Y(SCE)/Y(SCI)) in each step became an index of scratch resistance, dust adhesion resistance, and cleaning properties. Evaluation was performed in the following criteria from the results below.

In addition, H, that is, Y(SCE)/Y(SCI) was calculated by measuring the sample surface and obtaining a ratio of Specular Component Excluded (SCE) and Specular Component Included (SCI) of the Y values by a spectral colorimeter CM-700d (manufactured by Konica Minolta, Inc.).

<Scratch resistance>

A difference of $H_{T3}$ after ultrasonic wave washing was performed (after Step T3) and $H_{T0}$ before a dust test was performed (after Step T0): $\Delta H_{T3\text{-}T0}=H_{T3}-H_{T0}$ was evaluated as an index of scratch resistance, according to criteria below.

(Evaluation criteria)

AA: $\Delta H_{T3\text{-}T0}$ was less than 2%
A: $\Delta H_{T3\text{-}T0}$ was 2% or greater and less than 5%
B: $\Delta H_{T3\text{-}T0}$ was 5% or greater and less than 10%
C: $\Delta H_{T3\text{-}T0}$ was 10% or greater

<Dust adhesion resistance>

A difference of $H_{T1}$ after a dust test was performed (after Step T1) and $H_{T3}$ after ultrasonic wave washing was performed (after Step T3): $\Delta H_{T1\text{-}T3}=H_{T1}-H_{T3}$ was evaluated as an index of dust adhesion resistance according to criteria below.

(Evaluation criteria)

A: $\Delta H_{T1\text{-}T3}$ was less than 10%
B: $\Delta H_{T1\text{-}T3}$ was 10% or greater and less than 20%
C: $\Delta H_{T1\text{-}T3}$ was 20% or greater

<Cleaning properties>

A difference of $H_{T2}$ after high pressure washing with water was performed (after Step T2) and $H_{T3}$ after ultrasonic wave washing was performed (after Step T3): $\Delta H_{T2-T3}=H_{T2}-H_{T3}$ was evaluated as an index of dust adhesion resistance according to criteria below.

(Evaluation criteria)

A: $\Delta H_{T2-T3}$ was less than 10%

B: $\Delta H_{T2-T3}$ was 10% or greater and less than 20%

C: $\Delta H_{T2-T3}$ was 20% or greater

Results are presented in Table 2.

[Table 2]

| | Physical property value | | | Performance evaluation result | | | |
|---|---|---|---|---|---|---|---|
| | Elastic recovery rate % | Surface hardness $N/mm^2$ | Water contact angle degree | Durability | Scratch resistance | Dust adhesion resistance | Cleaning properties |
| Example 1 | 90 | 2 | 9 | A | AA | A | A |
| Example 2 | 99 | 3 | 11 | A | AA | A | A |
| Example 3 | 90 | 2 | 9 | A | A | A | A |
| Example 4 | 90 | 2 | 9 | A | B | A | A |
| Example 5 | 90 | 2 | 9 | B | A | A | A |
| Example 6 | 90 | 2 | 9 | B | A | A | A |
| Example 7 | 90 | 2 | 35 | A | A | B | B |
| Example 8 | 65 | 10 | 10 | A | B | A | A |
| Example 9 | 90 | 2 | 39 | A | AA | B | C |
| Example 10 | 90 | 2 | 9 | - | A | A | A |
| Comparative Example 1 | 55 | 280 | 8 | B | C | A | A |
| Comparative Example 2 | 55 | 280 | 88 | B | C | C | C |
| Comparative Example 3 | 90 | 2 | 92 | A | AA | C | C |

From the results presented in Table 2, it was found that in the case of any one of hardness (100 $N/mm^2$ or less), an elastic recovery rate (60% or greater), and a water contact angle (40° or less) of the surface covering layer in the film mirrors of Comparative Examples 1 to 3 was not satisfied, any one of scratch resistance, or dust adhesion resistance and cleaning properties decreased.

In contrast, in Examples 1 to 10 according to the invention, in which hardness (100 $N/mm^2$ or less), an elastic recovery rate (60% or greater), and a water contact angle (40° or less) were satisfied, scratch resistance was high, and dust adhesion resistance and cleaning properties were also high.

In addition, from the comparison between Examples I and 3, it was found that the surface covering layer was formed by curing the composition (coating liquid) including an $\alpha$-hydroxyketone-based photopolymerization initiator and

an α-aminoketone-based photopolymerization initiator as a polymerization initiator such that scratch resistance became more satisfactory.

In addition, from the contrast between Examples 3 to 5, it was found that the durability was further improved by having the ultraviolet absorption layer between the metal reflection layer and the surface covering layer. In addition, it was found that the scratch resistance was further improved in the case that the ultraviolet absorption layer includes the ultraviolet absorber of which (absorbance in 365 nm)/(absorbance in 340 nm) was 0.5 or less, and (absorbance in 400 nm)/(absorbance in 340 nm) was 0.1 or less. This is because, if an ultraviolet absorber having high ultraviolet absorbance in a wavelength range of curing the surface covering layer is used, in the case where the ultraviolet absorber was applied on the surface covering layer and was moved between layers on the surface covering layer, there is a concern in that curing of the surface covering layer was decreased.

In addition, from the contrast between Examples 3 and 9, it was found that it is preferable to use a non-fluorine-based surfactant.

As described above, the effect of the invention is clear.

Reference numerals and symbols

1 support

2 surface covering layer
3 metal reflection layer
4 ultraviolet absorption layer
10 composite film
20 film mirror for solar light reflection

## Claims

**1.** A composite film comprising:

a support; and
a surface covering layer,
wherein an elastic recovery rate of the surface covering layer is 60% or greater, a surface hardness thereof is 100 $N/mm^2$ or less, and a water contact angle of a surface thereof is 40° or less.

**2.** The composite film according to claim 1,
wherein the surface covering layer includes a polymer of at least an urethane (meth)acrylate monomer.

**3.** The composite film according to claim 1 or 2,
wherein the surface covering layer includes at least a polymer of a monomer having a polyrotaxane structure.

**4.** The composite film according to any one of claims 1 to 3,
wherein the surface covering layer is formed by being photocured with UV exposure with a converted light amount of 95 $mJ/cm^2$ or greater.

**5.** The composite film according to any one of claims 1 to 4,
wherein the surface covering layer is formed by curing a composition including an α-hydroxyketone-based photopolymerization initiator and an α-aminoketone-based photopolymerization initiator.

**6.** A film mirror for solar light reflection comprising:

a support;
a metal reflection layer; and
a surface covering layer,
wherein an elastic recovery rate of the surface covering layer is 60% or greater, a surface hardness thereof is 100 $N/mm^2$ or less, and a water contact angle of a surface thereof is 40° or less.

**7.** The film mirror for solar light reflection according to claim 6,
wherein the surface covering layer includes a polymer of at least an urethane (meth)acrylate monomer.

**8.** The film mirror for solar light reflection according to claim 6 or 7,
wherein the surface covering layer includes at least a polymer of a monomer having a polyrotaxane structure.

**9.** The film mirror for solar light reflection according to any one of claims 6 to 8, wherein the surface covering layer is formed by being photocured with UV exposure with a converted light amount of 95 $mJ/cm^2$ or greater.

**10.** The film mirror for solar light reflection according to any one of claims 6 to 9, further comprising:

an ultraviolet absorption layer between the metal reflection layer and the surface covering layer.

**11.** The film mirror for solar light reflection according to claim 10,
wherein the ultraviolet absorption layer includes at least one ultraviolet absorber having B/A of 0.5 or less and C/A of 0.1 or less, wherein A represents an absorbance at the wavelength of 340 nm, B represents an absorbance at the wavelength of 365 nm, and C represents an absorbance at the wavelength of 400 nm.

**12.** The film mirror for solar light reflection according to any one of claims 6 to 11,
wherein the surface covering layer is formed by curing a composition including an α-hydroxyketone-based photopolymerization initiator and an α-aminoketone-based photopolymerization initiator.

FIG. 1

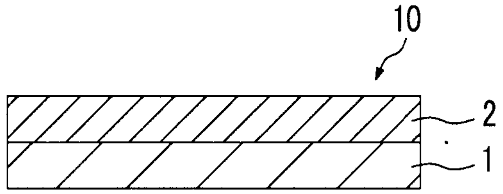


FIG. 2

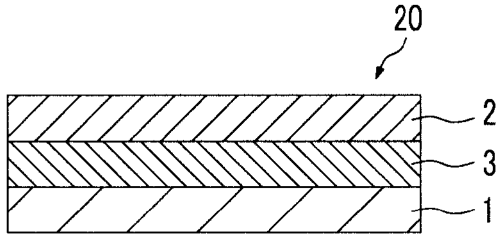


FIG. 3

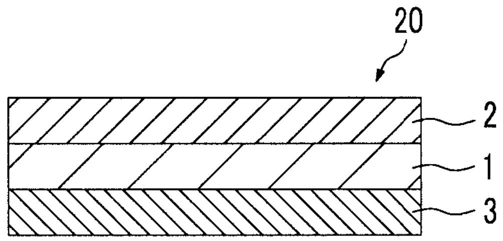


FIG. 4

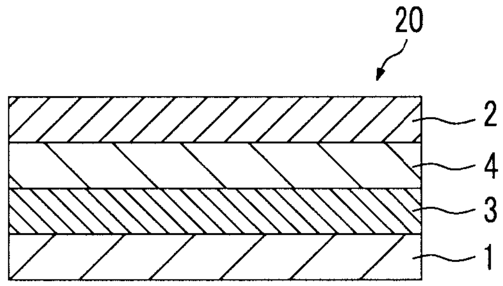

**INTERNATIONAL SEARCH REPORT**

International application No.
PCT/JP2014/072375

A. CLASSIFICATION OF SUBJECT MATTER
*B32B7/02*(2006.01)i, *B32B27/00*(2006.01)i, *B32B27/30*(2006.01)i, *C08J5/18* (2006.01)i

According to International Patent Classification (IPC) or to both national classification and IPC

B. FIELDS SEARCHED

Minimum documentation searched (classification system followed by classification symbols)
B32B1/00-43/00, C08J5/00-5/02, C08J5/12-5/22

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | WO 2011/096320 A1 (Konica Minolta Opto, Inc.), 11 August 2011 (11.08.2011), claims; paragraphs [0083] to [0104], [0145] to [0151]; examples; fig. 1 & US 2012/0287521 A1 & EP 2533076 A1 | 1-12 |
| Y | JP 2011-077397 A (Dainippon Printing Co., Ltd.), 14 April 2011 (14.04.2011), claims 1, 5; paragraph [0029] (Family: none) | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search 25 November, 2014 (25.11.14) | Date of mailing of the international search report 09 December, 2014 (09.12.14) |
| Name and mailing address of the ISA/ Japanese Patent Office | Authorized officer |
| Facsimile No. | Telephone No. |

Form PCT/ISA/210 (second sheet) (July 2009)

**INTERNATIONAL SEARCH REPORT**

International application No.
PCT/JP2014/072375

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2009-215179 A (Fujifilm Corp.), 24 September 2009 (24.09.2009), claims; paragraphs [0001], [0038], [0041], [0084], [0165]; examples <particularly, paragraph [0160]> & US 2011/0003909 A1 & WO 2009/110496 A1 & CN 101959841 A & KR 10-2010-0127800 A | 1-12 |
| Y | JP 2008-291208 A (Fujifilm Corp.), 04 December 2008 (04.12.2008), claims; paragraphs [0005], [0012], [0013] (Family: none) | 3,8,11 |
| Y | JP 2009-102455 A (Canon Inc.), 14 May 2009 (14.05.2009), paragraphs [0032], [0048], [0052] (Family: none) | 5,12 |
| A | JP 2010-237415 A (Konica Minolta Opto, Inc.), 21 October 2010 (21.10.2010), entire text & US 2010/0245991 A1 | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012008166 A
- JP 2012025821 A
- JP 2005307140 A
- JP 2009007540 A
- JP 2006135271 A
- JP 2010248464 A
- JP 2010084196 A
- US 2010080964 A